# EUROPEAN PATENT SPECIFICATION

(11) **EP 3 799 533 B1**
(45) Date of publication and mention of the grant of the patent: **17.07.2024**
(21) Application number: 19200077.6
(22) Date of filing: 27.09.2019
(51) Int. Cl.: H05B 47/11, H05B 47/115, H05B 47/20

(54) **SELF-ADAPTIVE LIGHTING CONTROL**
SELBSTADAPTIVE BELEUCHTUNGSSTEUERUNG
COMMANDE D'ÉCLAIRAGE AUTO-ADAPTATIVE

(43) Date of publication of application: 31.03.2021
(73) Proprietor: Helvar Oy Ab, 02150 Espoo (FI)
(72) Inventor: VESTERINEN, Matti, 02150 ESPOO (FI)
(74) Representative: Berggren Oy

(56) References cited:
- US-A1- 2012 262 069
- US-B2- 8 890 418
- US-B2- 9 474 138

## Description

### TECHNICAL FIELD

The example and non-limiting embodiments of the present invention relate to operation of a luminaire in a lighting network.

### BACKGROUND

In many scenarios, a luminaire is controlled at least partially based on the presence of one or more persons in the space illuminated by the luminaire such that the lights are switched (and kept) on while presence of one or more persons in the space is detected and switched (and kept) off while no persons are detected in the space. In a typical solution in this regard, a control entity receives respective sensor signals from one or more passive infrared (PIR) sensors, determines occupancy or non-occupancy accordingly, and switches/keeps the lights on (at a normal light output level) in response to occupancy and switches/keeps the lights off (or at another low light output level) in response to non-occupancy.

Modern lighting control typically may further employ sensors of other type as further basis for the lighting control. As an example in this regard, the control entity in a luminaire receives respective sensor signals from one or more light sensors that are arranged to observe light levels in the space illuminated by the luminaire and adjusts the light output level of the luminaire at least partially based on the indicated observed light level.

Sensor signals such as ones conveying the occupancy information and/or the light level information provide valuable control information that, on one hand, enables adjusting the light output of the luminaire such that sufficient light level is provided in the space in view of current occupancy of the space, while on the other hand enables energy conservation via reducing the light output of the luminaire when no occupancy in the space is detected and/or when the light level is sufficient even without substantial light output from the luminaire.

In many lighting solutions a lighting system of multiple luminaires is arranged for illumination of a space or one or more spaces that are physically close to each other. Luminaires of the lighting system may be communicatively coupled to each other via a wireless communication network or via respective wireless communication links. In example, a wireless mesh network may be applied to enable wirelessly connecting luminaires of the lighting system to each other in a flexible manner. The wireless communication capability of a luminaire may be applied, for example, to transmit information pertaining to its own operation to other luminaires of the lighting network and, conversely, receive such information from other luminaires of the lighting network. Such information may be referred to as status information and it may involve, for example, sensor information captured by a luminaire (e.g. an occupancy/non-occupancy indication based on a PIR sensor signal, a light level indication based on a light sensor signal) and/or operational information pertaining to actions carried out by a luminaire (e.g. an indication of the luminaire switching its light output on or off, an indication of a light intensity level assumed by the luminaire).

Together with the sensor signals (e.g. a PIR sensor signal and/or a light sensor signal) locally available in a given luminaire, such status information pertaining to respective operational states of other luminaires of the lighting system enable autonomous control of the given luminaire that still accounts for the operational status of other luminaries of the lighting system. Such lighting control in the given luminaire may involve usage of preprogrammed control logic or control algorithm that in the course of its operation reacts to status information received from other luminaires (in view of the respective local sensor signals from a PIR and/or a light sensor) in a predetermined manner and/or such lighting control may be self-adaptive in the sense that the given luminaire may, in the course of its operation, learn relationships between patterns or sequences in the status information received from other luminaires and (preprogrammed) lighting control actions taken thereat and, consequently, adapt as least some aspects of its preprogrammed control logic accordingly.

In related art, US 9,474,138 B2 discloses a method of detecting a failed luminaire and/or light sensor in a lighting system comprising M luminaires and N light sensors. The elements Dsl of an N×M transfer matrix D expresses how each luminaire I affect a light sensor s with respect to sensed light intensity, wherein s=1, 2, . . . N, and I=1, 2, . . . , M. The method comprises the steps of: setting the intensity of light emitted by the respective luminaires in the lighting system to a first intensity setting according to the respective elements of a first intensity vector I(1), determining a first sensor intensity vector E(1), setting the intensity of light emitted by the respective luminaires to at least a second intensity setting according to the respective elements of a second intensity vector I(2), wherein at least one element of I(2) differs from a corresponding element or elements in determining a second sensor intensity vector E(2), determining fault detection vectors from a difference between E(1) and D·I(1) and between E(2) and D·I(2), respectively, and identifying a failed luminaire and/or light sensor on basis of a difference between corresponding elements of the respective fault detection vectors. The present invention further relates to a failure detection system for detecting a failed luminaire and/or light sensor.

Further in related art, US 8,890,418 B2 discloses apparatuses, methods and systems for lighting fixture determining its power usage and monitoring its operational health. One embodiment includes a method of a lighting fixture determining its power usage. The method includes sensing, by an ambient light sensor, an intensity of light emitted from the lighting fixture, and estimating power usage of the lighting fixture based on the sensed intensity of light.

### SUMMARY

It is an object of the present invention to provide a technique that facilitates a control device serving to control light output from a luminaire of a lighting system automatically detecting an irregularity in lighting characteristic of a luminaire of the lighting system.

According to an example embodiment, a luminaire for illumination of a space in a lighting arrangement comprising one or more luminaires is provided, the luminaire comprising at least one light source and a lighting control device for controlling light output from the at least one light source, the lighting control device comprising: a control means for controlling light output from the at least one light source in accordance with a predefined lighting control logic; a communication means for wireless communication with other luminaires of the lighting arrangement, the communication means arranged to receive status indications from the other luminaires of the lighting arrangement, wherein each status indication is descriptive of an operating characteristic of a respective one of the other luminaires of the lighting arrangement and wherein said status indications comprise respective light intensity indications that indicate light intensity level applied for the light output in a respective one of the other luminaires of the lighting arrangement; and a monitoring means for monitoring operation of the luminaire and/or respective operation of one or more other luminaires of the lighting arrangement based on a light sensor signal that is descriptive of observed light level in said space, the monitoring means arranged to carry out a monitoring procedure comprising: deriving an expected light level characteristic based on information received at the lighting control device, wherein said information comprises a history of observed light levels in said space and at least one of the following: a history of light intensity levels applied for the at least one light source, a history of status indications received from the other luminaires of the lighting arrangement, deriving a current observed light level characteristic based on the light sensor signal, determining whether the current observed light level characteristic matches the expected light level characteristic, and detecting a malfunction in the lighting arrangement in response to the current observed light level characteristic failing to match the expected light level characteristic.

The exemplifying embodiments of the invention presented in this patent application are not to be interpreted to pose limitations to the applicability of the appended claims. The verb "to comprise" and its derivatives are used in this patent application as an open limitation that does not exclude the existence of also unrecited features.

Some features of the invention are set forth in the appended claims. Aspects of the invention, however, both as to its construction and its method of operation, together with additional objects and advantages thereof, will be best understood from the following description of some example embodiments when read in connection with the accompanying drawings.

### BRIEF DESCRIPTION OF FIGURES

The embodiments of the invention are illustrated by way of example, and not by way of limitation, in the figures of the accompanying drawings, where
Figure 1A illustrates a block diagram of some components of a lighting unit according to an example;
Figure 1B illustrates a block diagram of some components of a lighting arrangement according to an example;
Figure 2 illustrates lighting units of a lighting arrangement arranged for illumination of a space according to an example;
Figure 3 illustrates a method according to an example;
Figure 4 illustrates a method according to an example;
Figure 5 illustrates a method according to an example; and
Figure 6 illustrates a block diagram of some elements of an apparatus according to an example.

### DESCRIPTION OF SOME EMBODIMENTS

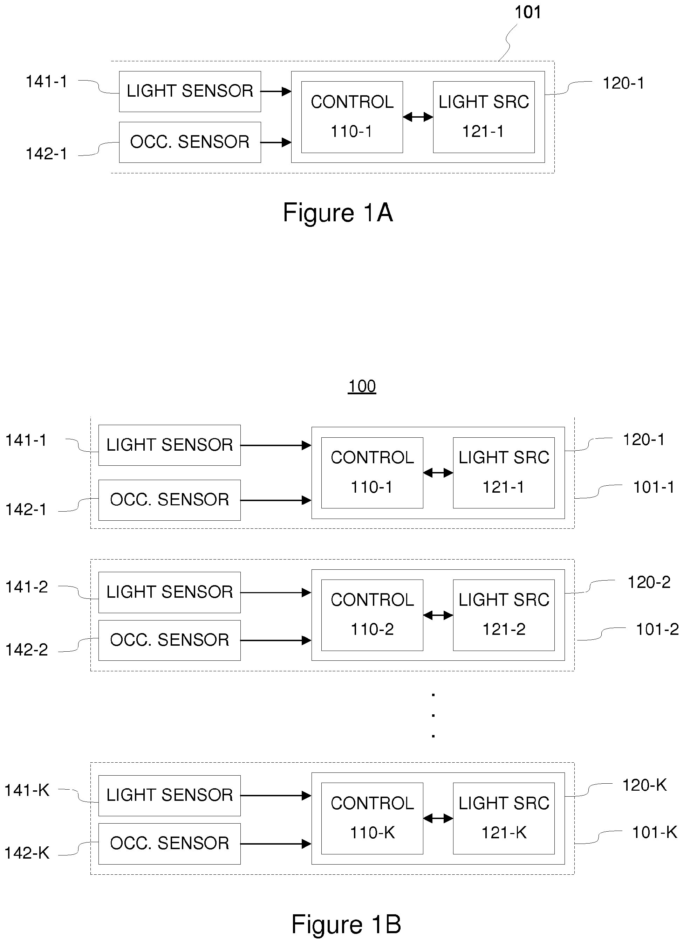

Figure 1A illustrates a block diagram of some logical components of a lighting unit 101 according to an example, the lighting unit 101 comprising a luminaire 120-1, a light sensor 141-1 and an occupancy sensor 142-1, where each of the light sensor 141-1 and the occupancy sensor 142-1 is coupled to the luminaire 120-1, e.g. via a respective wired connection. The luminaire 120-1 comprises a lighting control device 110-1 and at least one light source 121-1.

The lighting control device 110-1 comprises a lighting control means (e.g. a lighting control portion) for controlling the light output from the at least one light source 121-1, a monitoring means (e.g. a monitoring portion) for monitoring operation of the lighting unit 101 and/or one or more other lighting units and a communication means (e.g. a communication portion) for wireless communication with respective control devices of other luminaires 120, the communication means hence enabling the communicative coupling between the luminaire 120-1 and other luminaires 120 via a wireless communication network and/or via respective wireless links. The lighting control device 110-1 is arranged to control light output of the luminaire 120-1 based at least in part on information received from the light sensor 141-1 and/or from the occupancy sensor 142-1 and/or on information received from other luminaires 120 via the communication means.

Figure 1B illustrates a block diagram of some logical components of a lighting arrangement 100 according to an example, where the lighting arrangement comprises a plurality of lighting units 101-1, 101-2, ..., 101-K. Hence, the lighting arrangement comprises luminaires 120-1, 120-2, ..., 120-K, light sensors 141-1, 141-2, ..., 141-K and occupancy sensors 142-1, 142-2, ..., 142-K, where the light sensor 141-k and the occupancy sensor 142-k are coupled to the luminaire 120-k via respective wired links. The lighting arrangement 100 may be also referred to as a lighting system or a lighting network. The luminaires 120-1, 120-2, ... 120-K represent a plurality of (i.e. two or more) luminaires, where an individual luminaire may be referred to via a reference number 120-k. Along similar lines, the light sensors 141-1, 141-2, ..., 141-K represent a plurality of (i.e. two or more) light sensors 141, where the individual light sensor coupled to the luminaire 120-k may be referred to via a reference number 141-k and the occupancy sensors 142-1, 142-2, ..., 142-K represent a plurality of (i.e. two or more) occupancy sensors 142, where the individual occupancy sensor coupled to the luminaire 120-k may be referred to via a reference number 142-k. Each luminaire 120-k comprises a respective lighting control device 110-kand respective at least one light source 121-k. The structure and operation of each luminaire 120-k is similar to that described in the foregoing for the luminaire 120-1.

As described in the foregoing, each luminaire 120-k is coupled to the light sensor 141-k and the occupancy sensor 142-k. Each of the light sensor 141-k and the occupancy sensor 142-k may be provided as part of the luminaire 120-k (e.g. arranged in the same housing with the luminaire 120-k) or as a respective sensor entity that is separate from the luminaire 120-k. In a further example, the light sensor 141-k and the occupancy sensor 142-k may be provided in a sensory assembly that is separate from the luminaire 120-k.

The light sensor 141-k may be arranged to observe ambient light level in (the portion of) the space (to be) illuminated by the luminaire 120-k and to provide a light sensor signal that is descriptive of or otherwise enables deriving the current ambient light level in (the portion of) the space illuminated by the luminaire 120-k. The light sensor signal from the light sensor 141-k received at the lighting control device 110-k may be referred to as a local light sensor signal. The occupancy sensor 142-k may be arranged to observe occupancy (or non-occupancy) in (the portion of) the space and to provide an occupancy sensor signal that is descriptive of or otherwise enables deriving the current occupancy status (occupancy or non-occupancy) in (the portion of) the space (to be) illuminated by the luminaire 120-k. The occupancy sensor signal from the occupancy sensor 142-k received at the lighting control device 110-k may be referred to as a local occupancy sensor signal. In a non-limiting example, the occupancy sensor 142-k is provided as a motion sensor, such as a passive infrared (PIR) sensor. In this regard, for practical purposes a sensor signal from a motion sensor indicating motion (or lack thereof) may directly serve as or translate into an occupancy sensor signal that indicates one of occupancy or non-occupancy in (the portion of) the space monitored by the motion sensor.

In a non-limiting example, the at least one light source 121-k comprises one or more light emitting diodes (LEDs) and the lighting control device 110-k comprises or is provided as a LED driver device, whereas in another non-limiting example the at least one light source 121-k comprises one or more fluorescent lamps and the lighting control device 110-k comprises or is provided as an electronic ballast.

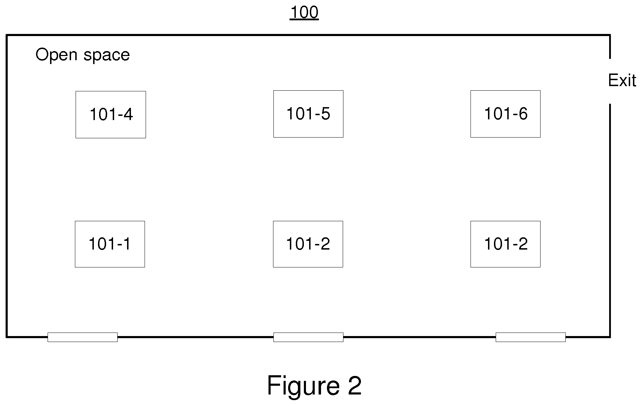

The lighting arrangement 100 may be arranged for illuminating respective portions or areas of an indoor or outdoor space or as a lighting arrangement for illuminating respective one or more (indoor or outdoor) spaces that are adjacent or otherwise close to each other. As a few non-limiting examples, the illuminated space may comprise e.g. an office room, an open office space, a corridor, a stairway, a meeting room, a classroom, an auditorium, a retail store, a warehouse, a factory or other industrial establishment, a parking garage, a parking lot, a sports venue, etc. Figure 2 illustrates the lighting units 101 of the lighting arrangement 100 arranged for illumination of a space according to an example, which space in this non-limiting example comprises an open office space. In this example, the lighting arrangement 100 comprises lighting units 101-1, 101-2, 101-3, 101-4, 101-5 and 101-6, each arranged for illuminating a respective sub-portion of the space. The lighting units 101-1 to 101-6 represent a plurality of (i.e. two or more) lighting units, where an individual lighting unit may be referred to via a reference number 101-k.

The lighting control device 110-k, e.g. the lighting control means therein, may be preprogrammed (or otherwise provided) with a lighting control logic that defines the manner of controlling the light output from the luminaire 120-k in dependence of the local light sensor signal and/or in dependence of the local occupancy sensor signal. The preprogrammed lighting control logic may define one or more pairs of a predefined local triggering condition and a lighting control action to be carried out as a response to an occurrence of the predefined local triggering condition that may directly or indirectly pertain to the local occupancy sensor signal and/or to the local light sensor signal. Herein, the triggering condition is designated as 'local' due its occurrence locally, relying on the local occupancy sensor signal received from the occupancy sensor 142-k and/or the local light sensor signal received from the light sensor 141-k. The light output control provided by the lighting control device 110-k may substantially follow from the lighting control portion therein implementing the lighting control logic defined for the lighting control device 110-k. However, for brevity and clarity of the description, in the following lighting control actions arising from implementation of the lighting control logic are predominantly described as operations carried out by the lighting control device 110-k.

The preprogrammed lighting control logic may be defined by configuring or reconfiguring the lighting control device 110-k to operate accordingly upon manufacturing, upon installation and/or upon maintenance operation carried out for the lighting control device 110-kand/or the luminaire 120-k. The lighting control logic may be provided e.g. as program code stored in a memory in the lighting control device 110-k that will be executed by a processor in the lighting control device 110-k in the course of its operation. In general, the preprogrammed lighting control logic may define one or more pairs of a predefined triggering condition and a lighting control action to be carried out as a response to an occurrence of the predefined triggering condition, where the triggering condition may be based, for example, on the local light sensor signal, on a local occupancy sensor signal, on an external sensor signal, on a signal or message received from another luminaire, etc.

Non-limiting examples of pairs of a local triggering condition and a lighting control action to be taken as a response to an occurrence of the local triggering condition that pertains to the local occupancy sensor signal include the following.
- The lighting control device 110-k may be arranged to, as a response to the local occupancy sensor signal indicating occupancy after a period of non-occupancy, switch on the light output from the luminaire 120-k at a respective target light intensity I_{tgt,k}.
- The lighting control device 110-k may be arranged to, as a response to the local occupancy sensor signal indicating continuous occupancy, keep the light output from the luminaire 120-k at the current light intensity, e.g. at the respective target light intensity I_{tgt,k}.
- The lighting control device 110-k may be arranged to, as a response to the local occupancy sensor signal indicating non-occupancy after a period of occupancy, start a first switch-off timer to measure a respective switch-off period T_{off,k}, to start a respective dim-down timer to measure a respective dim-down period T_{dim,k} (where T_{off,k} > T_{dim,k}), to adjust the light output from the luminaire 120-k to a respective intermediate light intensity I_{int,k} (where I_{int,k} < I_{tgt,k}) in response to the respective dim-down timer elapsing before the local occupancy sensor signal again indicating occupancy and to adjust the light output from the luminaire 120-k to a respective stand-by light intensity I_{off,k} in response to the respective switch-off timer elapsing before the local occupancy sensor signal indicating occupancy.

The lighting control parameters described in the examples above, i.e. the switch-off period T_{off,k}, the dim-down period T_{dim,k}, the target light intensity I_{tgt,k}, the intermediate light intensity I_{int,k} and the stand-by light intensity I_{off,k} may be set to respective preprogrammed default values, which are stored in the memory in the lighting control device 110-k. In this regard, the switch-off period T_{off,k} and the dim-down period T_{dim,k} may be set to respective default values, e.g. such that the switch-off period T_{off,k} is set to a first value and the dim-down period T_{dim,k} is set to a second value that is smaller than the first value. The first value may be for example a suitable value chosen from the range from 5 to 10 minutes whereas the second value may be in the order of a few minutes. Along similar lines, the target light intensity I_{tgt,k} may be defined as a respective first predefined percentage of the maximum light intensity of the at least one light source 121-k, for example a respective suitable value chosen from the range from 70 % to 100 %, e.g. 80 %, may be applied. Along similar lines, the intermediate light intensity I_{int,k} may be defined as a second respective predefined percentage of the maximum light intensity of the at least one light source 121-k, for example a respective suitable value chosen from the range from 20 % to 50 %, e.g. 30 %, may be applied. Moreover, the stand-by light intensity I_{off,k} may be defined as a third respective predefined percentage of the maximum light intensity of the at least one light source 121-k, for example a respective suitable value chosen from the range from 0 % to 20 %, e.g. 0 % or 10 %, may be applied.

According to an example, the lighting control device 110-k operates to provide the light output from the at least one light source 121-k at the respective target light intensity I_{tgt,k} whenever the local occupancy sensor signal indicates occupancy. In another example, the lighting control device 110-k may be arranged to adjust the light output from the at least one light source 121-k in dependence of the observed light level indicated by the local light sensor signal such that the resulting light level in combination with light from other light sources in the proximity of the luminaire 120-k (e.g. ambient light and/or light from one or more other luminaires 120) is kept at or close to a desired value. Such functionality may be referred to as light harvesting or daylight harvesting.

In order to provide the light harvesting functionality, the lighting control logic in the lighting control device 110 may define one or more pairs of a local triggering condition and a lighting control action to be taken as a response to an occurrence of the local triggering condition that pertains to the local light sensor signal. Non-limiting examples in this regard include the following.
- The lighting control device 110-k may be arranged to, as a response to the local light sensor signal indicating light level that is below a respective target light level L_{tgt,k} by more than a respective margin Mₖ, increase the light intensity of the at least one light source 121-k until the local light sensor signal indicates light level that meets the respective target light level L_{tgt,k} (or until reaching 100 % light intensity).
- The lighting control device 110-k may be arranged to, as a response to the local light sensor signal indicating light level that exceeds the respective target light level L_{tgt,k} by more than the respective margin Mₖ, decrease the light intensity of the at least one light source 121-k until the local light sensor signal indicates light level that meets the respective target light level L_{tgt,k} (or until reaching the respective stand-by light intensity I_{off,k}).

In other words, when the local occupancy sensor signal indicates occupancy, the lighting control device 110-k may be arranged to apply the local light sensor signal to adjust the light intensity of the light output such that its own light output in combination with light provided by other sources (e.g. other luminaires 120 of the lighting arrangement 100 and/or ambient light) provides illumination at the respective target light level L_{tgt,k}. The lighting control parameters pertaining to lighting control actions triggered based on the local light sensor signal, i.e. the target light level L_{tgt,k} and the margin Mₖ may be set to respective preprogrammed values, which may be stored in the memory in the lighting control device 110-k.

The lighting control device 110-k may be further arranged to control the light output from the luminaire 120-k in accordance with one or more control signals received from a user-operable control panel arranged in the space (to be) illuminated by the luminaire 120-k. The control panel may be coupled to the lighting control device 110-k by a wired or wireless communication link or communication network. In this regard, the control panel may enable user actions for switching the lights on and setting the lights off and possibly also for adjusting the lights to a desired light intensity. Consequently, the lighting control device 110-k may be arranged to control the light output under control of the one or more control signals from the control panel accordingly, e.g. to switch on the light output from the luminaire 120-k (at the respective target light intensity I_{tgt,k}), to adjust the light output from the luminaire 120-k to the respective stand-by light intensity I_{off,k} (e.g. switch off the light output) and/or to adjust the light output from the luminaire 120-k to a user-selected light intensity.

The lighting control device 110-k may be, alternatively or additionally, arranged to switch on the light output from the luminaire 120-k in response to a command or message received from a remote control device, which may comprise, for example, a dedicated remote control device or a mobile communication device (such as a mobile phone or a tablet computer) provided with a software application that provides the remote control functionality. The remote control device may enable similar control of the light output from the luminaire 120-k as described above for the control panel, whereas the lighting control device 120-k may receive the one or more control signals from the remote control device via a wireless communication link or communication network, e.g. via the communication means of the lighting control device 110-k.

The lighting control device 110-k may be, alternatively or additionally, arranged to switch on the light output from the luminaire 120-k in response to the luminaire 120-k receiving operating power (e.g. from the mains electricity) after a period of not receiving the operating power.

As described in the foregoing, the lighting control device 110-k comprises the communication means that enable the lighting control device 110-k to wirelessly communicate with other lighting control devices of the lighting arrangement 100, thereby enabling communication between luminaires 120 of the lighting arrangement 100. The communication means in the lighting control device 110-k may comprise a wireless transceiver that is capable of communicating with wireless transceivers in respective lighting control devices 110 of other luminaires 120 using a wireless communication technique or protocol. The wireless communication may be provided by using a suitable short-range wireless communication technique known in the art that enables communication over ranges from a few meters up to a few hundred meters. Examples of suitable wireless communication techniques include Bluetooth, Bluetooth Low-Energy, ZigBee, WLAN/Wi-Fi according to a IEEE 802.11 family of standards, etc. Further examples include infrared communications and other non-radio-based short-range communication techniques.

The choice of the short-range wireless communication technique and network topology for a specific embodiment of the lighting arrangement 100 may depend e.g. on the required communication range and/or requirements with respect to energy-efficiency of the communication means. As a concrete non-limiting example, the wireless communication may rely on a wireless mesh network model, for example on a mesh network according to the Bluetooth Mesh networking protocol known in the art.

In the course of its operation, the lighting control device 110-k is arranged to transmit status indication messages via the communication means therein. Each status indication message comprises, in addition to information defined by the applied communication protocol, one or more status indications that are descriptive of respective current (or recent) operating characteristic of the luminaire 120-k and/or the lighting control device 110-k transmitting the status indication message. Conversely, the lighting control device 110-k receives status indication messages (and hence status indications) from other lighting control devices 110 of the lighting arrangement 100. A status indication transmitted from the lighting control device 110-k may comprise an action indication that identifies a lighting control action taken by the lighting control device 110-k that has transmitted the status indication and/or a sensor indication that is descriptive of an occupancy status or an observed light level in the lighting control device 110-k. Non-limiting examples of such status indications are described in the following:
- A status indication may comprise an action indication that indicates the lighting control device 110-k switching on the light output from the luminaire 120-k (e.g. at the respective target light intensity I_{tgt,k} or at another light intensity).
- A status indication may comprise an action indication that indicates the lighting control device 110-k keeping the light output from the luminaire 120-k at the current light intensity level (e.g. at the respective target light intensity I_{tgt,k} or at another light intensity).
- A status indication may comprise an action indication that indicates the lighting control device 110-k switching off the light output from the luminaire 120-k (e.g. completely switching off the light or adjusting the light output to the respective stand-by light intensity I_{off,k}).
- A status indication may comprise an action indication that indicates the lighting control device 110-k adjusting or setting the light output from the luminaire 120-k to a light intensity indicated in the action indication, thereby enabling directly indicating the new light intensity adopted for the luminaire 120-k. In a related example, such an action indication may indicate the lighting control device 110-k adjusting or changing the light output from the luminaire 120-k from a first light intensity indicated in the action indication to a second light intensity indicated in the action indication, thereby enabling explicitly indicating dimming down or dimming up of the light intensity (to be) applied for the luminaire 120-k. Such an action indication may result, for example, from a change in the light intensity level of the at least one light source 121-k that arises from a lighting control action taken by the lighting control device 110-k in response to a respective triggering condition that pertains to the local light sensor signal and/or to the local occupancy sensor signal or from one or more control signals received from the user-operable control panel or remote control device (e.g. in accordance to one of the examples described in the foregoing). In the lighting control device 110 receiving such status indication, the received light intensity indication may be considered as a remote light intensity indication pertaining to the luminaire 120-k.
- A status indication may comprise a sensor indication that indicates the current occupancy status (occupancy or non-occupancy) derived by the lighting control device 110-k based on the local occupancy sensor signal therein.
- A status indication may comprise a sensor indication that indicates the current observed light level derived by the control device 110-k based on the local light sensor signal therein.

The lighting control device 110-k may be arranged to transmit a status indication comprising a respective action indication, for example, each time it takes a lighting control action that changes the light intensity of the light output from the luminaire 120-k (e.g. switches the light on, switches the light to the respective stand-by light intensity I_{off,k}, dims down the light output to the respective intermediate light intensity I_{int,k}, adjusts the light output to some other light intensity, etc.) as a response to a respective predefined local triggering condition. Moreover, a status message comprising an action indication that indicates keeping the light output of the luminaire 120-k at the current light intensity level may be transmitted e.g. at predefined time intervals during a continuous period of the local occupancy sensor signal indicating occupancy. The lighting control device 110-k may be arranged to transmit a status indication comprising a respective sensor indication, for example, at predefined time intervals and/or in response to change in the underlying local sensor signal (e.g. a change from occupancy to non-occupancy or vice versa, a change of observed light level that exceeds a predefined change threshold).

In an example, a status indication or a status indication message conveying the status indication may further comprise a device identifier assigned to the lighting control device 110-k (or to the luminaire 120-k) that has transmitted the status indication, in other words an identification of the luminaire 120-k to which the status indication pertains. The device identifier may comprise, for example, an address, a serial number, a name, etc. assigned to the lighting control device 110-k (or that assigned to the luminaire 120-k) or to the communication means therein.

Upon reception of a status message carrying one or more status messages originating from another lighting control device 110-j, the lighting control device 110-k may be arranged to derive a received signal strength indication (RSSI) pertaining to the received status message. Since the RSSI at least in part reflects the distance between the other lighting control device 110-j transmitting the status message and the lighting control device 110-k receiving status message, the RSSI value may serve as an indication of the distance between the lighting control devices 110-k and 110-j. In case the wireless communication between the luminaires 120 of the lighting arrangement 100 relies on a wireless mesh network model, the status message (or a lower-layer message that carries the status message) may comprise an indication of hop count that indicates the number of hops (i.e. the number of intermediate nodes of the wireless mesh network) between the lighting control devices 110-k and 110-j and hence the hop count received in a status message may serve as an indication of the distance between the lighting control devices 110-k and 110-j.

In the course of its operation, the monitoring means in the lighting control device 110-k may be arranged to store, in the memory therein, respective indications that are descriptive of the operation of the lighting control device 110-k and/or the luminaire 120-k in general. Such data may be referred to as history data and it may comprise one or more of the following:
- A history of locally obtained sensor data including light level indications derived based on the local light sensor signal and/or occupancy indications derived based on the local occupancy sensor signal. In this regard, the light level indications may be stored at respective predefined time intervals and/or each time the observed light level changes by more than a predefined threshold, whereas the occupancy indications may be stored at respective predefined time intervals and/or each time a change in occupancy status (from non-occupancy to occupancy or vice versa) is observed.
- A history of light intensity levels applied for the light output of the at least one light source 121-k at the luminaire 120-k. This information may be referred to as local light intensity indications. The local light intensity indications may be stored at predefined time intervals and/or each time the lighting control device 110-k operates to adjust or change the light intensity of the at least one light source 121-k.
- A history of status indications received from respective lighting control devices 110 of other luminaires 120 of the lighting arrangement 100, including a device identifier of the lighting control device 110-j (or that of the luminaire 120-j) to which the respective status indication pertains. The stored received status indications may be further accompanied by the RSSI derived for or the hop count received in the underlying status indication message.

The history data may cover a predefined time period and the indications included in the history data may be stored together with respective timing information that indicates the capturing time and/or the reception time of a respective piece of history data (whichever applies). The timing information may comprise a respective timestamp that may indicate, for example, one or more of the following: time with respect to a predefined reference time, time of the day, day of the week, month of a year. As an example in this regard, the time of the day may define one of daytime (when a threshold-exceeding amount of ambient light is assumed to be available) and nighttime (when no a non-threshold-exceeding amount of ambient light is assumed to be available), whereas in another example the time of the day may define or at least estimate the clock time, including at least an hour of the day, possibly together with minute of the hour.

In the course of its operation, the monitoring means in the lighting control device 110-k may be arranged to carry out a procedure to identify other luminaires 120 of the lighting arrangement 100 that may be operating in its close proximity. This procedure may be referred to as neighborhood detection and it may be based on part of the history data available in the memory of the lighting control device 110-k. The neighborhood detection aims at identifying those ones of the other luminaires 120 whose light output reaches (the portion of) the space the luminaire 120-k serves to illuminate while it may further aim at identifying such other luminaries 120 that are in close proximity of the luminaire 120-k.

As an example, the neighborhood detection may involve an analysis that considers history data representing a time period of interest in order to identify one or more luminaires whose light output reaches (the portion of) the space the luminaire 120-k serves to illuminate at a sufficient light level. Herein, without losing generality, the identified luminaires may be referred to as adjacent luminaires. In this regard, the analysis may commence from identifying one or more other luminaries 120 as candidate luminaires for serving as an adjacent luminaire for the luminaire 120-k and the analysis may further involve the following steps for each candidate luminaire 120-j:
- search the history data over the time period of interest to identify time instants at which the lighting control device 110-k has received status indications that indicate the respective lighting control device 110-j of the respective candidate luminaire 120-j switching on its light output;
- determine, for each identified time instant, based on the light level indications of the history data, a respective light level difference between the light level indicated (immediately) following the respective identified time instant the light level indicated (immediately) preceding the respective identified time instant;
- derive a representative light level difference based on the respective light level differences determined for the identified time instants, for example as an average or as a median of the determined light level differences; and
- designate the candidate luminaire 120-j as an adjacent luminaire for the luminaire 120-k in response to the representative light level exceeding a predefined light level threshold.

The candidate luminaires considered in the procedure outlined above may include all luminaires 120 from which at least one status indication that indicates switching on the light output has been received. Alternatively, the procedure outlined above may include a preliminary step of selecting only those luminaires whose status indication messages have been received at the lighting device controller 110-k at RSSI that exceeds a signal strength threshold and/or those luminaires whose status messages have been received at the lighting device controller 110-k with hop count that is smaller than a predefined hop threshold as the candidate luminaires, thereby carrying out the above steps only for those other luminaires that are estimated to be sufficiently close to the luminaire 120-k in order to avoid excessive computation in the analysis. In an example, the signal strength threshold referred to above comprises a predefined threshold. In another example, the signal strength threshold comprises an adaptive threshold defined based on RSSIs of the status indication messages received within the time period of interest, e.g. as a predefined percentage of a maximum RSSI among the status indication messages received within the time period of interest ( for example 10 % or another value selected from a range from 5 to 20 %.

In an example, the neighborhood detection procedure carried out by the lighting control device 110-k may consider any time period of interest represented in the history data without consideration of the light intensity applied for the at least one light source 121-k in the luminaire 120-k. Thus, the analysis of history data in this regard may consider both sub-periods of time where the light output from the at least one light source 121-k is switched on and sub-periods of time where the light output from the at least one light source 121-k is switched off or set to the respective stand-by light intensity I_{off,k}. In another example, the time period of interest for the neighborhood detection procedure is selected such that the light output from the at least one light source 121-k is switched off or set to the respective stand-by light intensity I_{off,k} throughout. The latter example ensures that the light output from the at least one light source 121-k does not unnecessarily distort the observed light levels derived based on the local light sensor signal.

The representative light level differences for those other luminaires 120 that are selected as the adjacent luminaires may be stored in the memory in the lighting control device for subsequent use, for example, in context of a neighborhood monitoring procedure described in the following.

The monitoring means in the lighting control device 110-k may be further arranged to carry out neighborhood monitoring procedure in order to detect unexpected light levels in (the portion of) the space the luminaire 120-k serves to illuminate, which may indicate a malfunction in the luminaire 120-k or in one of the other luminaires 120 of the lighting arrangement 100, e.g. in one of the adjacent luminaires.

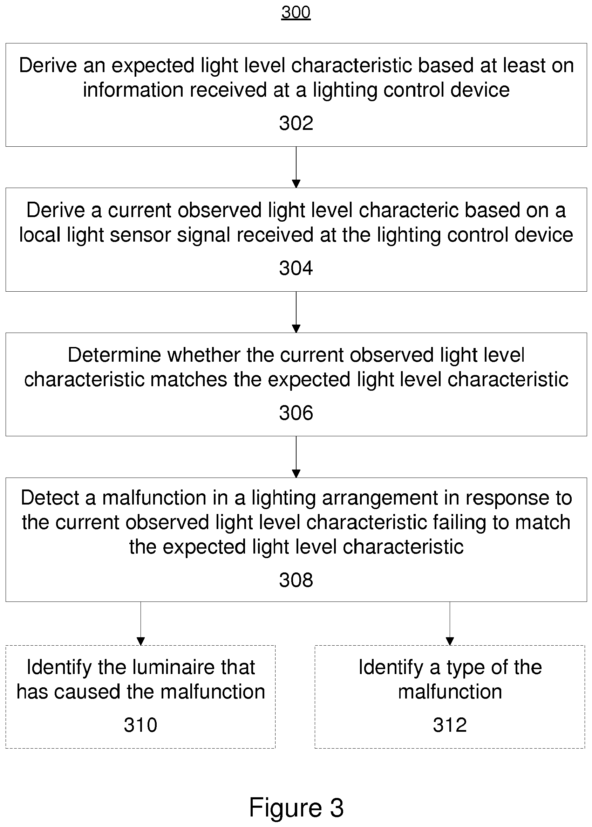

The neighborhood monitoring is based on information received at the lighting control device 110-k, including at least the observed light level derived on basis of the local light sensor signal received at the lighting control device 110-k from the light sensor 141-k. Moreover, the neighborhood monitoring may be further based on one or more of the following: a history of observed light levels in (the portion of) the space the luminaire 120-k serves to illuminate, respective most recent status indications from the other luminaires 120 and/or a history of status indications received from one or more luminaires 120. At a high level, the neighborhood monitoring may be carried out in accordance with a method 300 that is illustrated by a flowchart in Figure 3. The operations described with references to blocks 302 to 312 pertaining to the method 300 may be varied or complemented in a number of ways, for example as described in the foregoing or in the following in context of operation of the monitoring means and/or the control means in the lighting control device 110-k.

The method 300 commences from the control means in the lighting control device 110-k controlling the light output from the luminaire 120-k in accordance with the preprogrammed lighting control logic. As described in the foregoing, this may involve controlling the light output based at least in part on one of or more of the local occupancy sensor signal and the local light sensor signal. From this starting point, the monitoring means in the lighting control device 110-k may proceed into monitoring operation of the luminaires 120-k and/or that of one or more other luminaires 120 of the lighting arrangement based on the local light sensor signal according to the method 300.

The method 300 comprises deriving an expected light level characteristic based on information received at the lighting control device 110-k, as indicated in block 302. In this regard, as described in the foregoing and in the following, such received information may comprise, for example, one or more of the following: the history of the observed light levels in (the portion of) the space the luminaire 120-k serves to illuminate, the history of status indications received from the other luminaires 120 of the lighting arrangement, respective most recently received status indications from one more other luminaires 120.

The method 300 further comprises deriving a current observed light level characteristic based on the local light sensor signal, as indicated in block 304. The current observed light level characteristic may be derived based at least in part on an instantaneous value of the local light sensor signal, the current observed light level characteristic hence reflecting e.g. currently (or recently) observed light level or change thereof.

The method 300 further comprises determining whether the current observed light level characteristics matches the expected light level characteristic, as indicated in block 306, and detecting a malfunction in the lighting system 100 in response to the current observed light level characteristic failing to match the expected light level characteristic, as indicated in block 308. The malfunction in the lighting system 100 detected by the lighting control device 110-k typically indicates a malfunction in the luminaire 120-k or in one of the other luminaires in its close proximity, e.g. in one of the adjacent luminaires. In this regard, the method 300 optionally further comprises identifying the luminaire 120 that has caused the malfunction, as indicated in block 310, and/or identifying a type of malfunction, as indicated in block 312.

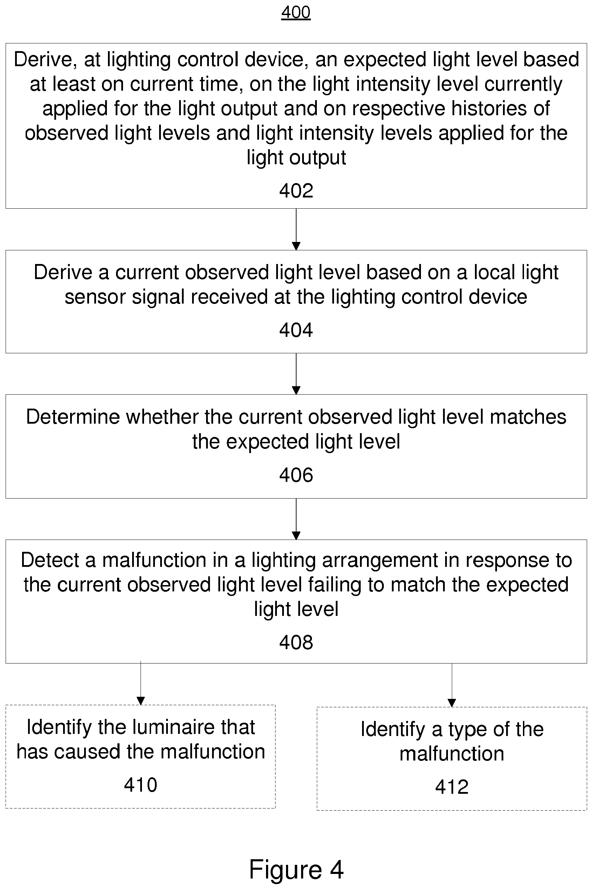

In a first example, the neighborhood monitoring procedure considers an expected light level in view of the current observed light level, in other words the neighborhood monitoring procedure considers respective instantaneous values of the expected light level and the observed light level. In this regard, derivation of the expected light level relies, at least in part, on the history of observed light levels stored in the history data at the lighting control device 110-k. The neighborhood monitoring according to the first example may be carried out, for example, in accordance with a method 400 that is illustrated by a flowchart in Figure 4. The operations described with references to blocks 402 to 412 pertaining to the method 400 may be varied or complemented in a number of ways, for example as described in the following.

The method 400 comprises estimating the (current) expected light level based on current time (of the day), on the light intensity level currently applied for the light output of the at least one light source 121-k and on the respective histories of the observed light levels in (the portion of) the space the luminaire 120-k serves to illuminate and the light intensity levels applied for the light output of the at least one light source 121-k, as indicated in block 402. The method 400 further comprises deriving the current observed light level based on the local light sensor signal, as indicated in block 404. The method 400 further comprises determining whether the current observed light level matches the expected light level, as indicated in block 406, and detecting a malfunction in the lighting arrangement 100 in response to the current observed light level failing to match the expected light level, as indicated in block 408. Along the lines described for the method 300, the malfunction in the lighting system 100 detected by the lighting control device 110-k typically indicates a malfunction in the luminaire 120-k or in one of the other luminaires in its close proximity, e.g. in one of the adjacent luminaires. In this regard, the method 400 optionally further comprises identifying the luminaire 120 that has caused the malfunction, as indicated in block 410, and/or identifying a type of malfunction, as indicated in block 412.

As described above with references to block 402, the estimation of the expected light level may be carried out based on respective histories of the light level indications (that are descriptive of observed light levels at the lighting control device 110-k) and on the local light intensity indications (that are descriptive of light intensity levels applied in the light output from the at least one light source 121-k) in consideration of current time (of the day). In this regard, the monitoring means in the lighting control device 110-k may be arranged to derive one or more mapping functions or mapping tables as a preparatory step preceding the operation of the method 400.

According to an example, derivation of the one or more mapping functions or mapping tables may be based on respective histories of the observed light levels in (the portion of) the space the luminaire 120-k serves to illuminate, the status indications received from one or more other luminaires 120 of the lighting arrangement 100 and the light intensity levels applied for the light output of the at least one light source 121-k provided in a portion of the history data that represents a time period of interest. As non-limiting examples, a given mapping function or mapping table of the one or more mapping functions or mapping tables may be provided for deriving the expected light level in (the portion of) the space the luminaire 120-k serves to illuminate in consideration of one or more of the following:
- the current time (e.g. the time of the day),
- the light intensity level currently applied for the light output of the at least one light source 121-k of the luminaire 120-k, and/or
- respective light intensity levels applied for light output from one or more other luminaires 120 of the lighting arrangement 100.

According to an example, the one or more mapping functions or mapping tables may comprise a first mapping function or mapping table that is applicable for deriving the expected light level in (the portion of) the space the luminaire 120-k serves to illuminate in consideration of the light intensity level currently applied for the light output of the at least one light source 121-k. The first mapping function or mapping table may be derived based on respective histories of the observed light levels in (the portion of) the space the luminaire 120-k serves to illuminate and the light intensity levels applied for the light output of the at least one light source 121-k. The first mapping function or mapping table hence serves to model previously observed relationship between the light intensity level applied in the luminaire 120-k and the observed light level in (the portion of) the space the luminaire 120-k serves to illuminate. Consequently, the operations pertaining to block 402 may comprise applying the first mapping function or mapping table to estimate the expected light level in dependence of the light intensity level currently applied for the at least one light source 121-k.

According to another example, the one or more mapping functions or mapping tables may comprise a second mapping function or mapping table that is applicable for deriving the expected light level in (the portion of) the space the luminaire 120-k serves to illuminate in consideration of the current time (e.g. the time of the day) and in consideration of the light intensity level currently applied for the light output of the at least one light source 121-k. The second mapping function or mapping table may be derived based on respective histories of the observed light levels in (the portion of) the space the luminaire 120-k serves to illuminate and the light intensity levels applied for the light output of the at least one light source 121-k in view of the respective timing information available in the history data. The second mapping function or mapping table hence serves to model previously observed relationship between the light intensity level applied in the luminaire 120-k and the observed light level in (the portion of) the space the luminaire 120-k serves to illuminate in consideration of the time of the respective observations. As a non-limiting example this regard, the second mapping function or mapping table may provide a respective mapping from the current time (of the day) to the expected light level for a plurality of different light intensity levels applied for the at least one light source 121-k, including the target light intensity I_{tgt,k}, the stand-by light intensity I_{off,k} and/or the intermediate light intensity I_{int,k}. Consequently, the operations pertaining to block 402 may comprise applying the second mapping function or mapping table to estimate the expected light level in dependence of current time (of the day) and in dependence of the light intensity level currently applied for the at least one light source 121-k.

According to another example, the one or more mapping functions or mapping tables may comprise a third mapping function or mapping table that is applicable for deriving the expected light level in (the portion of) the space the luminaire 120-k serves to illuminate in consideration of the light intensity level currently applied for the light output of the at least one light source 121-k and in consideration of respective light intensity levels currently applied for one or more other luminaires 120 of the lighting arrangement 100. The third mapping function or mapping table may be derived based on respective histories of the observed light levels in (the portion of) the space the luminaire 120-k serves to illuminate, the light intensity levels applied for the light output of the at least one light source 121-k and respective light intensity indications received in status indications received from one or more other luminaires 120. The resulting third mapping function or mapping table may hence serve to model previously observed relationship between the light intensity level applied in the luminaire 120-k and the observed light level in (the portion of) the space the luminaire 120-k serves to illuminate in consideration of the respective light intensity levels applied for one or more other luminaires 120. In variation of this example, the third mapping function or mapping table may be derived further based on current time (of the day), thereby resulting in a third mapping function or mapping table that is applicable for deriving the expected light level in (the portion of) the space the luminaire 120-k serves to illuminate in consideration of the current time (of the day), in consideration of the light intensity level currently applied for the light output of the at least one light source 121-k and in consideration of respective light intensity levels most recently indicated for the one or more other luminaires 120 in status messages received therefrom. Consequently, the operations pertaining to block 402 may comprise applying the third mapping function or mapping table to estimate the expected light level possibly in dependence of current time (of the day), in dependence of the light intensity level currently applied for the at least one light source 121-k and in dependence of the respective light intensity levels most recently indicated for the one or more other luminaires 120.

According to another example, the one or more mapping functions or mapping tables may comprise a respective fourth mapping function or mapping table pertaining to a respective one of one or more other luminaires 120 of the lighting arrangement 100, where the respective fourth mapping function or mapping table is applicable for deriving the expected light level in (the portion of) the space the luminaire 120-k serves to illuminate in consideration of the light intensity level currently applied for the light output of the at least one light source 121-k and in consideration of respective light intensity currently applied for the respective one of the one or more other luminaires 120. Hence, the fourth mapping function or mapping table pertaining to a particular other luminaire 120-j may be considered as a specific example of the third mapping function or mapping table described above that separately considers respective contribution from one or more of the luminaires 120 of the lighting arrangement 100 in estimation of the expected light level.

Derivation of the fourth mapping function(s) may involve deriving the fourth mapping table or mapping function pertaining to the particular other luminaire 120-j based on respective histories of the observed light levels in (the portion of) the space the luminaire 120-k serves to illuminate, the light intensity level currently applied for the light output of the at least one light source 121-k and light intensity levels applied for the light output from the particular other luminaire 120-j. The fourth mapping function or mapping table pertaining to the luminaire 120-j hence serves to model previously observed relationship between the light intensity level applied in the luminaire 120-k and the observed light level in (the portion of) the space the luminaire 120-k serves to illuminate in consideration of the light intensity level applied for the luminaire 121-j. Consequently, the operations pertaining to block 402 may comprise applying the fourth mapping function or mapping table pertaining to the luminaire 120-j to estimate the expected light level in dependence of the light intensity level currently applied for the at least one light source 121-k and in dependence of the light intensity level most recently indicated for the luminaire 120-j.

In variation of the above example, the fourth mapping function or mapping table pertaining to the luminaire 120-j may be derived further based on current time (of the day), thereby resulting in a fourth mapping function or mapping table pertaining to the luminaire 120-j that is applicable for deriving the expected light level in (the portion of) the space the luminaire 120-k serves to illuminate in consideration of the current time (of the day), in consideration of the light intensity level currently applied for the light output of the at least one light source 121-k and in consideration of the light intensity level most recently indicated for the luminaire 120-j. Consequently, the operations pertaining to block 402 may comprise applying the fourth mapping function or mapping table pertaining to the luminaire 120-j to estimate the expected light level in dependence of the current time (of the day), in dependence of the light intensity level currently applied for the at least one light source 121-k and in dependence of the light intensity level most recently indicated for the luminaire 120-j.

In a general case the derivation and, consequently, application of the one or more mapping functions or mapping tables that also consider the history of received status indications may consider status indications received from any other luminaire 120 of the lighting arrangement 100. However, in order to reduce the computational load involved and/or to improve reliability of the mapping, the derivation and application of the one or more mapping functions or mapping tables may only consider status indications received from those ones of the other luminaires 120 whose light output reaches (the portion of) the space the luminaire 120-k serves to illuminate at a sufficient light level. As described in the foregoing, such other luminaires 120 may be referred to as adjacent luminaires. The monitoring means in the lighting control device 110-k may have a priori information that identifies the adjacent luminaires. Such information may be received or defined, for example, upon installation, configuration or reconfiguration of the lighting control device 110-k and/or the luminaire 120-k. Alternatively, the monitoring means may be arranged to carry out the neighborhood detection procedure described in the foregoing in order to identify the adjacent luminaires among those luminaires whose status messages reach the lighting control device 110-k. Conversely, the monitoring means may ignore status indications received other luminaires 120 that are not designated as adjacent luminaires in derivation and application of the one or more mapping functions or mapping tables.

Along similar lines, in general case the derivation and, consequently, application of the one or more mapping functions or mapping tables that also consider the history of received status indications may consider any status indications received from the other luminaires 120 (e.g. from the adjacent luminaries), while on the other hand computational load in derivation of the one or more mapping functions or mapping tables may be reduced and/or reliability of the mapping may be improved via consideration of a predefined subset of status indications. As an example in this regard, a subset of the status indications considered may comprise one or more of the following:
an action indication that indicates another luminaire 120 having switched on its light output,
an action indication that indicates another luminaire 120 having switched off its light output,
an action indication that indicates the light intensity level applied for the light output of another luminaire 120,
an action indication that indicates a change from a first light intensity level to a second light intensity level in the light output of another luminaire 120,
a sensor indication that indicates an occupancy status in another luminaire 120,
a sensor indication that indicates an observed light level at another luminaire 120.

The derivation of each of the one or more mapping functions or mapping tables of the above-described kind may be carried out, for example, using a (multiple) linear regression technique known in the art. In another example, each the one or more mapping functions or mapping tables may be derived via usage of a machine-learning technique, such as one based on an artificial neural network (ANN) or on an support vector machine (SVM).

As described in the foregoing, the monitoring means in the lighting control device 110-k may be arranged to derive the one or more mapping functions or mapping tables as a preparatory step preceding the operation of the method 400. In the course of operation of the lighting control device 110-k, the monitoring means may initiate and carry out the preparatory step of the neighborhood monitoring procedure, for example, after having collected history data that covers at least a predefined time period following installation, configuration or re-configuration of the lighting control device 110-k and/or the luminaire 120-k. Such time period is one that is considered sufficient to provide a solid basis for estimation of the expected light level, for example a suitable value from a range of a few days to a few weeks. The monitoring means may be arranged to, once having collected sufficient amount of history data, carry out the preparatory step(s) of deriving the one or more mapping functions or mapping tables and/or carrying out the neighborhood detection in a continuous or repetitive manner, e.g. according to a predefined schedule such as at predefined time intervals. Subsequent (re-)derivation of the one or more mapping functions and/or neighborhood detection enable accounting e.g. for changes in the lighting arrangement 100 (e.g. introduction of one or more additional luminaires or removal of one or more of the luminaires 120) and/or rearrangement of (the portion of) the space the luminaire 120-k serves to illuminate.

After the preparatory step of deriving the one or more mapping functions or mapping tables has been completed, the monitoring means may be arranged to carry out the neighborhood monitoring procedure e.g. according to the method 400 according to a predefined schedule, for example at predefined time intervals. In other words, the monitoring means in the lighting control device 110-k may be arranged to repeatedly carry out the neighborhood monitoring procedure. According to an example, the monitoring means may be arranged to carry out the neighborhood monitoring procedure regardless of the current occupancy status in the lighting control device 110-k. According to another example, the monitoring means may be arranged to carry out the neighborhood monitoring procedure within a time period during which the local occupancy signal indicates non-occupancy. According to an example, the monitoring means may be arranged to carry out the neighborhood monitoring procedure regardless of the light intensity level currently applied for the light output from the at least one light source 121-k, whereas according to another example the monitoring means may be arranged to carry out the neighborhood monitoring procedure within a time period during which the light intensity level applied for the light output from the at least one light source 121-k does not exceed a predefined threshold value. As non-limiting examples, such threshold value may comprise the respective stand-by light intensity I_{off,k} or the respective intermediate light intensity I_{int,k}.

Referring back to operations pertaining to block 402, the monitoring means in the lighting control device 110-k may acquire the current time (of the day), for example, based on a clock signal available in or received at the lighting control device 110-k, whereas information regarding the light intensity level currently applied for the at least one light source 121-k and regarding the most recently received status indications of interest (if applicable) is readily available in the lighting control device 110-k.

Referring now to operations pertaining to block 406, determination whether the current observed light level matches the expected light level may comprise, for example, determining whether the current observed light level is within a predefined margin from the expected light level.

Referring now to operations pertaining to block 408, in case the above-discussed determination (cf. block 406) is affirmative, e.g. the current observed light level is within the predefined margin from the expected light level, no malfunction is detected and operation of the lighting control device 110-k and/or the luminaire 120-k continues as usual. On the other hand, in case the determination is not affirmative, e.g. the current observed light level is outside the predefined margin from the expected light level, the monitoring means in the lighting control device 110-k detects a malfunction in the lighting arrangement 100.

Referring now to operations pertaining to blocks 410 and 412, the detection of the malfunction may further result in the monitoring means identifying the luminaire 120 of the lighting arrangement 100 that has caused the malfunction and/or result in the monitoring means identifying a type of the malfunction in the luminaire 120-k or in another luminaire 120 In this regard, identification of the malfunctioning luminaire 120 and the type of malfunction may be carried out separately from each other or as a joint procedure that results both in identification of the malfunctioning luminaire and the type of malfunction.

As an example in this regard, the monitoring means in the lighting control device 110-k may be arranged to identify, in response to detecting a malfunction, whether the malfunction concerns the luminaire 120-k or at least one of the other luminaires 120 of the lighting arrangement 100 based at least in part on the history data. In an example, the monitoring means may be arranged to carry out, in response to detecting a malfunction, a failed luminaire detection procedure that may be partially based on the first or second mapping function or mapping table described in the foregoing:
- obtain, from the history data, a validation sequence of observed light levels that cover a detection period of interest, e.g. a time period of predefined duration that immediately precedes and/or immediately follows the time of detecting the malfunction,
- apply the first or second mapping function or mapping table to derive a corresponding reference sequence of expected light levels covering the time period of interest;
- determine malfunction in the luminaire 120-k or in another luminaire in dependence of the difference(s) between the validation sequence and the reference sequence:
   ∘ in case the change of observed light levels over time in the validation sequence follows a similar pattern than that of the reference sequence but at a lower light level, determine that the malfunction concerns at least one of the other luminaires 120 and that the malfunction arises from a lower-than-expected light output from one of the other luminaires 120;
   ∘ in case the change of observed light levels over time in the validation sequence follows a similar pattern than that of the reference sequence but at a higher light level, determine that the malfunction concerns at least one of the other luminaires 120 and that the malfunction arises from a higher-than-expected light output from one of the other luminaires 120;
   ∘ in case the change of observed light levels over time in the validation sequence fails to follow a similar pattern than that of the reference sequence, determine that the malfunction concerns the luminaire 120-k, while the malfunction may arise e.g. from erroneous operation of the light sensor 141-k, from erroneous operation of the at least one light source 121-k and/or from erroneous operation of a driving circuit controlled by the lighting control device 110-k.

After having carried out the failed luminaire detection procedure that results in determining that the malfunction concerns the luminaire 120-k, the monitoring means may proceed into reporting presence of a failure therein. The aspect of reporting the failure is described via examples in the following.

Alternatively or additionally, following the failed luminaire detection procedure, the monitoring means in the lighting control device 110-k may proceed into initiating a verification procedure regardless of the outcome of the failed luminaire detection procedure. The verification procedure may involve transmitting, via the communication means, to one or more other luminaires 120 of the lighting system 100 (e.g. to the adjacent luminaires described), a failure indication that includes the outcome of the failed luminaire detection procedure (e.g. one of the following: no malfunction detected, a malfunction detected in the luminaire 120-k, a malfunction detected in one of the other luminaires 120). Consequently, the one or more other luminaires 120 (e.g. the adjacent luminaires) may proceed into carrying out the failed luminaire detection procedure therein and transmitting a respective failure response indication that includes the outcome of the failed luminaire detection procedure therein to the luminaire 120-k (and to the one or more other luminaires 120, e.g. the adjacent luminaires).

In case the failed luminaire detection procedure carried out by the monitoring means of the lighting control device 110-k has resulted in determining that the malfunction concerns the luminaire 120-k and the respective failure responses from the one or more other luminaires 120 (e.g. the adjacent luminaires) indicate that none of the one or more other luminaries 120 finds itself as the malfunctioning one, the monitoring means in the lighting control device 110-k may conclude that the malfunction concerns the luminaire 120-k. In contrast, if the respective failure responses from the one or more other luminaires 120 (e.g. the adjacent luminaires) indicate that at least one of the one or more other luminaires 120 has also found itself as a malfunctioning one, the verification procedure may serve to indicate that malfunction concerns multiple luminaires 120 of the lighting system 100 or that a change that has an effect on lighting characteristics of the luminaire 120-k and at least one other luminaire 120 of the lighting arrangement 100 has occurred. As an example, such change may comprise introduction of one or more further luminaires in (the portion of) the space the luminaire 120-k serves to illuminate, removal of one or more luminaires 120 from (the portion of) the space the luminaire 120-k, refurbishment of (the portion of) the space the luminaire 120-k serves to illuminate, etc.

In case the failed luminaire detection procedure carried out by the monitoring means of the lighting control device 110-k has resulted in determining that the malfunction concerns at least one of the other luminaires 120 and the respective failure responses from the one or more other luminaires 120 (e.g. the adjacent luminaires) indicate that at least one of the one or more other luminaires 120 has found itself as a malfunctioning one, the verification procedure may serve to confirm that the luminaire 120-k is not the malfunctioning one and that the malfunction indeed concerns at least one of the other luminaires 120 (e.g. one of the adjacent luminaires). In contrast, if the respective failure responses from the one or more other luminaires 120 (e.g. the adjacent luminaires) indicate that none of the one or more other luminaires 120 has also found itself as a malfunctioning one, the outcome of the verification procedure is indefinite in the senses that no consensus regarding the malfunctioning luminaire 120 of the lighting system 100 has been reached even though unexpected light levels have been detected at least in (the portion of) the space the luminaire 120-k serves to illuminate.

Conversely, the monitoring means in the lighting control device 110-k may be arranged to carry out the failed luminaire detection procedure in response to receiving a failure indication from one of the other luminaires 120 (e.g. from one of the adjacent luminaires), and to transmit a respective failure response message including the outcome of the failed luminaire detection procedure carried to the one or more other luminaries 120. In this regard, reception of the failure indication results in (the monitoring means in the lighting control device 110-k of) the luminaire 120-k participating a verification procedure initiated by another luminaire 120 of the lighting arrangement 100. Consequently, the monitoring means in the lighting control device 110-k may handle the outcome of the failed luminaire detection procedure carried out therein and the failure responses received from the one or more other luminaires 120 in a similar manner as described in the foregoing in the example that concerns the verification procedure initiated by the lighting control device 110-k.

The monitoring means in the lighting control device 110-k may be further arranged to provide a malfunction report that is descriptive of detected malfunction status pertaining to the luminaire 120-k and/or to one or more other luminaires 120 (e.g. the adjacent luminaires). In this regard, the malfunction report may comprise an indication of a malfunction detected via operation described from block 402 to 408 of the method 400 described in the foregoing. In another example, the malfunction report may, additionally or alternatively, comprise malfunction information obtained via application of the failed luminaire detection procedure and/or the verification procedure (if applicable) described in the foregoing. As outlined in the examples provided in the foregoing, in viewpoint of the luminaire 120-k the malfunction information obtained via application of the failed luminaire detection procedure and/or the verification procedure may indicate e.g. one of the following malfunction statuses:
- the malfunction concerns the luminaire 120-k,
- the malfunction concerns one or more of the other luminaries 120,
- instead of malfunction there is a suspected change in the environment of the luminaire 120-k.

As an example, the monitoring means in the lighting control device 110-k may be arranged to provide the malfunction report by storing it in the memory of the lighting control device 110-k. Consequently, the malfunction report stored in the memory may be subsequently transmitted by the communication means to an external device in response to a request thereto. As non-limiting examples in this regard, such an external device may comprise a dedicated (mobile) device (such as the remote control device described in the foregoing) or a mobile communication device (such as a mobile phone, a tablet computer, a laptop computer, etc.) provided with a software application that provides the possibility to request and/or access the malfunction report in the memory of the lighting control device 110-k.

In another example, the monitoring means in the lighting control device 110-k may be arranged to transmit a status message comprising the malfunction report to one or more other luminaires 120 of the lighting arrangement 100 and/or to any other devices possibly coupled to the wireless network that (primarily) enables the wireless communication between the luminaires 120 of the lighting arrangement.

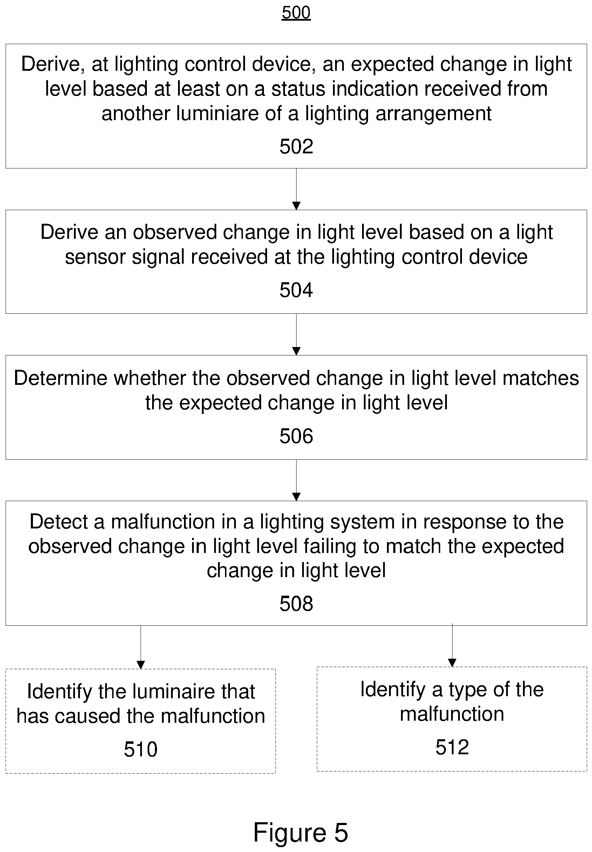

In a further example, the monitoring means in the lighting control device 110-k may be arranged to display information that is descriptive of at least part of the content of the malfunction report via a user interface provided in or for the lighting control device 110-k or in or for the luminaire 120-k. As an example in this regard, the user interface involved may comprise a display and at least part of the content of the malfunction report may be provided via the display by displaying text and/or a symbol that is descriptive of the content of the malfunction report. As another example in this regard, the user interface involved may comprise one or more visual indicators (such as small LEDs or indicator lights of other type) whose status may be applied to indicate content of the malfunction report. In an example, a single visual indicator may be applied such that a disabled state of the visual indicator (e.g. light off) indicates that no malfunction has been detected, whereas an enables state of the visual indicator (e.g. light on) indicates that a malfunction has been detected. In another example, the visual indicators may comprise a single multi-color indicator LED where non-illumination of the indicator LED indicates that no malfunction has been detected, illumination at a respective one of a multiple available colors serves to indicate detection of a respective one of predefined malfunction statuses (e.g. one of a malfunction concerning the luminaire 120-k, a malfunction concerning at least one other luminaire 120, a suspected change in the environment of the luminaire 120-k). In a variation of this example, a plurality of indicator LEDs (or visual indicators of other type) may be applied, each reserved to indicate either non-detection (indicator disabled, e.g. light off) or detection (indicator enabled, e.g. light on) of the respective malfunction status. In a second example, the neighborhood monitoring procedure considers presence of a malfunction via comparison of an expected change in light level and an observed change in light level. In this regard, derivation of the expected change in light level relies on status indications received from the other luminaires 120 of the lighting arrangement and, in particular, when the expected in light level is derived based on a particular status indication received from a particular other luminaire 120-j, the observed change in light level is derived based on respective observed light levels indicated by the local light sensor signal (immediately) after and (immediately) before reception of the particular status indication from the particular other luminaire 120-j. The neighborhood monitoring according to the second example may be carried out, for example, in accordance with a method 500 that is illustrated by a flowchart in Figure 5. The operations described with references to blocks 502 to 512 pertaining to the method 500 may be varied or complemented in a number of ways, for example as described in the following.

The method 500 comprises estimating the expected change in light level based at least on the particular status indication received from a particular other luminaire 120-j, as indicated in block 502. The method 500 further comprises deriving the observed change in light level based on the local light sensor signal at the lighting control device 110-k, as indicated in block 504. The method 500 further comprises determining whether the observed change in light level matches the expected change in light level, as indicated in block 506, and detecting a malfunction in the lighting arrangement 100 in response to the observed change in light level failing to match the expected change in light level, as indicated in block 508. Along the lines described for the method 300, the malfunction in the lighting system 100 detected by the lighting control device 110-k typically indicates a malfunction in the luminaire 120-k or in one of the other luminaires 120 in its close proximity, e.g. in one of the adjacent luminaires. In this regard, the method 500 optionally further comprises identifying the luminaire 120 that has caused the malfunction, as indicated in block 510, and/or identifying a type of malfunction, as indicated in block 512.

Referring to operations pertaining to blocks 502 and 504, deriving the expected change in light level may comprise deriving an indication of a direction of expected change in light level based on the particular status indication received from the luminaire 120-j, whereas deriving the observed change in light level may comprise deriving an indication of a direction of observed change in light level based on the local light sensor signal, e.g. based on respective light levels observed before and after the reception of the particular status indication. Herein, the indication of the direction of the (expected or observed) change in light level may comprise an indication of an (expected or observed) increase in light level or an (expected or observed) decrease in light level. Consequently, determination whether the observed change in light level matches the expected change in light level (cf. block 506) may comprise determination whether the respective directions of the expected change in light level and the observed change in light level are the same.

Still referring to operations pertaining to block 502, as an example, derivation of the direction of an expected change in light level may comprise indicating an expected increase in light level in response to receiving one of the following status indications from the particular other luminaire 120-j:
- a status indication that indicates switching on the light output from the particular other luminaire 120-j;
- a status indication that indicates light intensity level applied for the light output from the particular other luminaire 120-j, which status indication increase in light intensity level in comparison to the light intensity level indicated in the most recent previous status indication of the same kind received from the particular other luminaire 120-j.

Along similar lines, as an example, derivation of the direction of an expected change in light level may comprise indicating an expected decrease in light level in response to receiving one of the following status indications from the particular other luminaire 120-j:
- a status indication that indicates switching off the light output from the particular other luminaire 120-j;
- a status indication that indicates light intensity level applied for the light output from the particular other luminaire 120-j, which status indication decrease in light intensity level in comparison to the light intensity level indicated in the most recent previous status indication of the same kind received from the particular other luminaire 120-j.

Preferably, the method 500 consider status indications received from those ones of the other luminaires 120 of the lighting arrangement 100 whose light output reaches (the portion of) the space the luminaire 120-k serves to illuminate at a sufficient light level. As described in the foregoing, such other luminaires 120 may be referred to as adjacent luminaires. Along the lines described in context of the method 400 above, the monitoring means in the lighting control device 110-k may have a priori information that identifies the adjacent luminaires, which information may be received or defined, for example, upon installation, configuration or reconfiguration of the lighting control device 110-k and/or the luminaire 120-k. Alternatively, the monitoring means may be arranged to carry out the neighborhood detection procedure described in the foregoing in order to identify the adjacent luminaires among those luminaires whose status messages reach the lighting control device 110-k. Conversely, the monitoring means may ignore status indications received other luminaires 120 that are not designated as adjacent luminaires in estimation of the expected change in light level based at least on the particular status indication received from the particular other luminaire 120-j (cf. block 502).

Referring now to operations pertaining to block 508, in case the above-discussed determination (cf. block 506) is affirmative, e.g. the observed change in light level matches the expected change in light level, no malfunction is detected and operation of the lighting control device 110-k and/or the luminaire 120-k continues as usual. On the other hand, in case the determination is not affirmative, e.g. the observed change in light level does not match the expected change in light level, the monitoring means in the lighting control device 110-k detects a malfunction in the lighting arrangement 100.

Referring now to operations pertaining to blocks 510 and 512, the detection of the malfunction may further result in the monitoring means identifying the luminaire 120 of the lighting arrangement 100 that has caused the malfunction and/or result in the monitoring means identifying a type of the malfunction in the luminaire 120-k or in another luminaire 120 In this regard, identification of the malfunctioning luminaire 120 and the type of malfunction may be carried out separately from each other or as a joint procedure that results both in identification of the malfunctioning luminaire and the type of malfunction.

As an example in this regard, the monitoring means in the lighting control device 110-k may be arranged to identify, in response to detecting a malfunction, whether the malfunction concerns the luminaire 120-k or at least one of the other luminaires 120 of the lighting arrangement 100 based at least in part on the history data. In an example, the monitoring means may be arranged to carry out, in response to detecting a malfunction, the failed luminaire detection procedure described in the foregoing, possibly followed by the verification procedure described in the foregoing. Moreover, the monitoring means in the lighting control device 110-k may be further arranged to provide the malfunction report, for example in a manner described in the foregoing, *mutatis mutandis.*

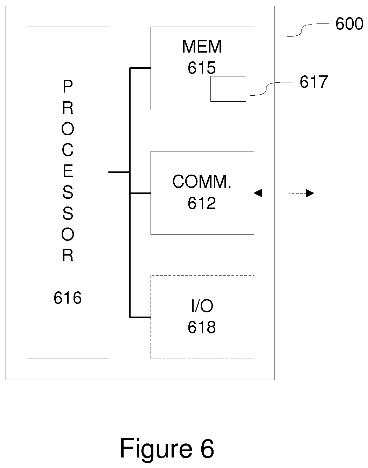

Figure 6 illustrates a block diagram of some components of an exemplifying apparatus 600. The apparatus 600 may comprise further components, elements or portions that are not depicted in Figure 6. The apparatus 600 may be referred to as a computing apparatus and it may be employed e.g. in implementing the lighting control device 110-k or in implementing one or more components of the lighting control device 110-k.

The apparatus 600 comprises a processor 616 and a memory 615 for storing data and computer program code 617. The memory 615 and a portion of the computer program code 617 stored therein may be further arranged to, with the processor 616, to implement at least some of the operations, procedures and/or functions described in the foregoing in context of the lighting control device 110-k.

The apparatus 600 comprises a communication portion 612 for communication with other devices. The communication portion 612 comprises at least one communication apparatus that enables wired or wireless communication with other apparatuses. A communication apparatus of the communication portion 612 may also be referred to as a respective communication means.

The apparatus 600 may further comprise user I/O (input/output) components 618 that may be arranged, possibly together with the processor 616 and a portion of the computer program code 617, to provide a user interface for receiving input from a user of the apparatus 600 and/or providing output to the user of the apparatus 600 to control at least some aspects of operation of the lighting control device 110-k implemented by the apparatus 600. The user I/O components 618 may comprise hardware components such as a display, a touchscreen, a touchpad, an arrangement of one or more keys or buttons, etc. The user I/O components 618 may be also referred to as peripherals. The processor 616 may be arranged to control operation of the apparatus 600 e.g. in accordance with a portion of the computer program code 617 and possibly further in accordance with the user input received via the user I/O components 618 and/or in accordance with information received via the communication portion 412.

Although the processor 616 is depicted as a single component, it may be implemented as one or more separate processing components. Similarly, although the memory 615 is depicted as a single component, it may be implemented as one or more separate components, some or all of which may be integrated/removable and/or may provide permanent / semi-permanent/ dynamic/cached storage.

The computer program code 617 stored in the memory 615, may comprise computer-executable instructions that control one or more aspects of operation of the apparatus 600 when loaded into the processor 616. As an example, the computer-executable instructions may be provided as one or more sequences of one or more instructions. The processor 616 is able to load and execute the computer program code 617 by reading the one or more sequences of one or more instructions included therein from the memory 615. The one or more sequences of one or more instructions may be configured to, when executed by the processor 616, cause the apparatus 600 to carry out at least some of the operations, procedures and/or functions described in the foregoing in context of the lighting control device 110-k.

Hence, the apparatus 600 may comprise at least one processor 616 and at least one memory 615 including the computer program code 617 for one or more programs, the at least one memory 615 and the computer program code 617 configured to, with the at least one processor 616, cause the apparatus 300 to perform at least some of the operations, procedures and/or functions described in the foregoing in context of the lighting control device 110-k.

The computer programs stored in the memory 615 may be provided e.g. as a respective computer program product comprising at least one computer-readable non-transitory medium having the computer program code 617 stored thereon, the computer program code, when executed by the apparatus 600, causes the apparatus 600 at least to perform at least some of the operations, procedures and/or functions described in the foregoing in context of the lighting control device 110-k. The computer-readable non-transitory medium may comprise a memory device or a record medium such as a CD-ROM, a DVD, a Blu-ray disc or another article of manufacture that tangibly embodies the computer program. As another example, the computer program may be provided as a signal configured to reliably transfer the computer program.

Reference(s) to a processor should not be understood to encompass only programmable processors, but also dedicated circuits such as field-programmable gate arrays (FPGA), application specific circuits (ASIC), signal processors, etc.

## Claims

1. A luminaire (120-k) for illumination of a space in a lighting arrangement (100) comprising one or more luminaries (120), the luminaire (120-k) comprising at least one light source (121-k) and a lighting control device (110-k) for controlling light output from the at least one light source, the lighting control device (110-k) comprising:
a control means for controlling light output from the at least one light source (121-k) in accordance with a predefined lighting control logic; and **characterised in that** the lighting control device further comprises:
a communication means for wireless communication with other luminaires of the lighting arrangement (100), the communication means arranged to receive status indications from the other luminaires of the lighting arrangement (100), wherein each status indication is descriptive of an operating characteristic of a respective one of the other luminaires of the lighting arrangement (100) and wherein said status indications comprise respective light intensity indications that indicate light intensity level applied for the light output in a respective one of the other luminaires of the lighting arrangement (100); and
a monitoring means for monitoring operation of the luminaire (120-k) and/or respective operation of one or more other luminaires of the lighting arrangement (100) based on a light sensor signal that is descriptive of observed light level in said space, the monitoring means arranged to carry out a monitoring procedure comprising:
deriving an expected light level characteristic based on information received at the lighting control device (110-k), wherein said information comprises a history of observed light levels in said space and at least one of the following: a history of light intensity levels applied for the at least one light source (121-k), a history of status indications received from the other luminaires of the lighting arrangement (100),
deriving a current observed light level characteristic based on the light sensor signal,
determining whether the current observed light level characteristic matches the expected light level characteristic, and
detecting a malfunction in the lighting arrangement (100) in response to the current observed light level characteristic failing to match the expected light level characteristic.

2. A luminaire (120-k) according to claim 1, wherein the current observed light level characteristic comprises a current observed light level in said space and wherein the expected light level characteristic comprises an expected light level in said space,
wherein the monitoring means is arranged to store, into a memory in the lighting control device (110-k), history data comprising the history of observed light levels in said space and the history of light intensity levels applied for the at least one light source (121-k), and
wherein deriving the expected light level characteristic comprises estimating the expected light level in said space based on said history data in dependence of one or more of the following: current time of the day, a light intensity level currently applied for the at least one light source (121-k).

3. A luminaire (120-k) according to claim 2, wherein deriving the expected light level characteristic comprises applying a predefined mapping function derived based on said history data to estimate the expected light level, wherein the mapping function is applicable for estimating the expected light level in dependence of one or more of the following: current time of the day, the light intensity level currently applied for the at least one light source (121-k)

4. A luminaire (120-k) according to claim 3,
wherein the monitoring means is arranged to derive said mapping function based on the respective histories of the observed light levels in the space and the light intensity levels applied for the at least one light source (121-k), and
wherein deriving the expected light level characteristic comprises applying the derived mapping function to estimate the expected light level in said space in dependence of the light intensity level currently applied for the at least one light source (121-k).

5. A luminaire (120-k) according to claim 3,
wherein the monitoring means is arranged to derive said mapping function based on the respective histories of the observed light levels in the space and the light intensity levels applied for the at least one light source (121-k) in view of respective timing information included in the history data; and
wherein deriving the expected light level characteristic comprises applying the derived mapping function to estimate the expected light level in said space in dependence of current time of the day and in dependence of the light intensity level currently applied for the at least one light source (121-k).

6. A luminaire (120-k) according to claim 2, wherein said status indications received from the other luminaires of the lighting arrangement (100) comprise light intensity indications originating from a particular other luminaire (120-j) that indicate light intensity level applied for the light output in the particular other luminaire (120-j),
wherein the monitoring means is arranged to store, into said history data, the history of status indications received from the one or more other luminaires (120), and
wherein deriving the expected light level characteristic comprises estimating the expected light level in said space based on the history data further in dependence of the light intensity level currently applied for the light output in the particular other luminaire (120-j).

7. A luminaire (120-k) according to claim 6, wherein deriving the expected light level characteristic comprises applying a predefined mapping function derived based on said history data to estimate the expected light level, wherein the mapping function is applicable for estimating the expected light level in dependence of the light intensity level currently applied for the at least one light source (121-k) and in dependence of the light intensity level currently applied for the light output in the particular other luminaire (120-j).

8. A luminaire (120-k) according to claim 7,
wherein the monitoring means is arranged to derive said mapping function based on the respective histories of the observed light levels in the space, the light intensity levels applied for the at least one light source (121-k) and the light intensity indications that indicate light intensity levels applied for the light output in the particular other luminaire (120-j); and
wherein deriving the expected light level characteristic comprises applying the derived mapping function to estimate the expected light level in said space in dependence of the light intensity level currently applied for the at least one light source (121-k) and in dependence of the light intensity level most recently received for the particular other luminaire (120-j).

9. A luminaire (120-k) according to claim 1,
wherein the observed light level characteristic comprises an observed change in light level in said space and wherein the expected light level characteristic comprises an expected change in light level in said space,
wherein deriving the expected light level characteristics comprises deriving the expected change in light level in response to a particular status indication received from a particular another luminaire (120-j) based on a direction of change in light level indicated in said particular status indication.

10. A luminaire (120-k) according to claim 9, wherein deriving the expected change in light level comprises indicating one of an expected increase or an expected decrease in light level and wherein deriving the observed change in light level comprises indicating one of an observed increase or an observed decrease in light level.

11. A luminaire (120-k) according to claim 9 or 10,
wherein deriving the expected light level characteristics comprises indicating an expected increase in light level in response to said particular status indication comprising one of the following: an indication of the particular another luminaire (120-j) having switched on its light output, an indication of the light intensity level applied for the light output of the particular other luminaire (120-j) that indicates increase in light intensity level in comparison to that indicated in the most recent previous status indication of the same kind received from said particular other luminaire (120-j), and/or
wherein deriving the expected light level characteristics comprises indicating an expected decrease in light level in response to said particular status indication comprising one of the following: an indication of the particular another luminaire (120-j) having switched off its light output, an indication of the light intensity level applied for the light output of the particular other luminaire (120-j) that indicates decrease in light intensity level in comparison to that indicated in a most recent previous status indication of the same kind received from said particular other luminaire (120-j).

12. A luminaire (120-k) according to any of claims 9 to 11, wherein the particular luminaire (120-j) is one of the other luminaires (120) whose light output reaches said space.

13. A luminaire (120-k) according to any of claims 1 to 12, wherein the monitoring means is arranged to identify, in response to detecting a malfunction, whether the malfunction concerns the luminaire (120-k) or at least one other luminaire of the lighting arrangement (100) based at least in part on history data comprising a history of observed light levels in said space and a history of light intensity levels applied for the at least one light source (121-k).

14. A luminaire (120-k) according to any of claims 1 to 13, wherein the monitoring means is arranged to provide, in response to detecting a malfunction, a malfunction report that is descriptive of detected malfunction status pertaining to the luminaire (120-k) and/or to one or more other luminaires of the lighting arrangement (100).

## Patentansprüche

1. Leuchte (120-k) zur Ausleuchtung eines Raumes in einer Beleuchtungsanordnung (100), umfassend eine oder mehrere Leuchten (120), wobei die Leuchte (120-k) mindestens eine Lichtquelle (121-k) und eine Beleuchtungssteuerungsvorrichtung (110-k) zum Steuern des von der mindestens einen Lichtquelle ausgegebenen Lichts umfasst, wobei die Beleuchtungssteuerungsvorrichtung (110-k) umfasst:
eine Steuerungseinrichtung zum des von der mindestens einen Lichtquelle (121-k) ausgegebenen Lichts gemäß einer vordefinierten Beleuchtungssteuerlogik; und
**dadurch gekennzeichnet, dass** die Beleuchtungssteuerungsvorrichtung ferner umfasst:
eine Kommunikationseinrichtung zur drahtlosen Kommunikation mit anderen Leuchten der Beleuchtungsanordnung (100), wobei die Kommunikationseinrichtung dazu ausgelegt ist, Statusanzeigen von den anderen Leuchten der Beleuchtungsanordnung (100) zu empfangen, wobei jede Statusanzeige eine Betriebskennlinie einer jeweiligen der anderen Leuchten der Beleuchtungsanordnung (100) beschreibt und wobei die Statusanzeigen jeweilige Lichtintensitätsanzeigen umfassen, die den für das ausgegebene Licht in einer jeweiligen der anderen Leuchten der Beleuchtungsanordnung (100) angewandten Lichtintensitätspegel angeben; und
eine Überwachungseinrichtung zum Überwachen des Betriebs der Leuchte (120-k) und/oder des jeweiligen Betriebs einer oder mehrerer anderer Leuchten der Beleuchtungsanordnung (100) basierend auf einem Lichtsensorsignal, das den beobachteten Lichtpegel in dem Raum beschreibt, wobei die Überwachungseinrichtung dazu ausgelegt ist, ein Überwachungsverfahren durchzuführen, umfassend:
Ableiten einer erwarteten Lichtpegelkennlinie basierend auf an der Beleuchtungssteuerungsvorrichtung (110-k) empfangenen Informationen, wobei die Informationen einen Verlauf der beobachteten Lichtpegel in dem Raum und mindestens eines von dem Folgenden umfassen: einem Verlauf der auf die mindestens eine Lichtquelle (121-k) angewandten Lichtintensitätspegel, einem Verlauf von Statusanzeigen, die von den anderen Leuchten der Beleuchtungsanordnung (100) empfangen wurden,
Ableiten einer aktuell beobachteten Lichtpegelkennlinie basierend auf dem Lichtsensorsignal,
Bestimmen, ob die aktuell beobachtete Lichtpegelkennlinie mit der erwarteten Lichtpegelkennlinie übereinstimmt, und
Erkennen einer Fehlfunktion in der Beleuchtungsanordnung (100) als Reaktion darauf, dass die aktuell beobachtete Lichtpegelkennlinie nicht mit der erwarteten Lichtpegelkennlinie übereinstimmt.

2. Leuchte (120-k) nach Anspruch 1, wobei die aktuell beobachtete Lichtpegelkennlinie einen aktuell beobachteten Lichtpegel in dem Raum umfasst, und wobei die erwartete Lichtpegelkennlinie einen erwarteten Lichtpegel in dem Raum umfasst,
wobei die Überwachungseinrichtung dazu ausgelegt ist, Verlaufsdaten in einem Speicher in der Beleuchtungssteuerungsvorrichtung (110-k) zu speichern, die den Verlauf der beobachteten Lichtpegel in dem Raum und den Verlauf der für die mindestens eine Lichtquelle angewandten Lichtintensitätspegel (121-k) umfassen, und
wobei das Ableiten der erwarteten Lichtpegelkennlinie Schätzen des erwarteten Lichtpegels in dem Raum basierend auf den Verlaufsdaten in Abhängigkeit von einem oder mehreren von dem Folgenden umfasst: aktuelle Tageszeit, ein aktuell für die mindestens eine Lichtquelle angewandter Lichtintensitätspegel (121-k).

3. Leuchte (120-k) nach Anspruch 2, wobei das Ableiten der erwarteten Lichtpegelkennlinie Anwenden einer vordefinierten Abbildungsfunktion umfasst, die basierend auf den Verlaufsdaten abgeleitet wurde, um den erwarteten Lichtpegel abzuschätzen, wobei die Abbildungsfunktion zum Schätzen des erwarteten Lichtpegels in Abhängigkeit von einem oder mehreren von dem Folgenden angewandt werden kann: aktuelle Tageszeit, die aktuell für die mindestens eine Lichtquelle (121-k) angewandte Lichtintensitätspegel.

4. Leuchte (120-k) nach Anspruch 3,
wobei die Überwachungseinrichtung dazu ausgelegt ist, die Abbildungsfunktion basierend auf den jeweiligen Verläufen der beobachteten Lichtpegeln in dem Raum und der für die mindestens eine Lichtquelle (121-k) angewandten Lichtintensitätspegel abzuleiten, und
wobei das Ableiten der erwarteten Lichtpegelkennlinie Anwenden der abgeleiteten Abbildungsfunktion, um die erwartete Lichtpegel in dem Raum in Abhängigkeit von dem aktuell für die mindestens eine Lichtquelle (121-k) angewandten Lichtintensitätspegel abzuschätzen, umfasst.

5. Leuchte (120-k) nach Anspruch 3,
wobei die Überwachungseinrichtung dazu ausgelegt ist, die Abbildungsfunktion basierend auf den jeweiligen Verläufen der beobachteten Lichtpegel in dem Raum und den für die mindestens eine Lichtquelle (121-k) angewandten Lichtintensitätspegeln hinsichtlich den auf die jeweiligen in den Verlaufsdaten enthaltenen Zeitinformationen abzuleiten; und
wobei das Ableiten der erwarteten Lichtpegelkennlinie Anwenden der abgeleiteten Abbildungsfunktion, um den erwartete Lichtpegel in dem Raum in Abhängigkeit von der aktuellen Tageszeit und in Abhängigkeit von dem aktuell für die mindestens eine Lichtquelle (121-k) angewandten Lichtintensitätspegel abzuschätzen, umfasst.

6. Leuchte (120-k) nach Anspruch 2, wobei die von den anderen Leuchten der Beleuchtungsanordnung (100) empfangenen Statusanzeigen von einer bestimmten anderen Leuchte (120-j) stammende Lichtintensitätsanzeigen umfassen, die einen Lichtintensitätspegel für die Lichtausgabe in der bestimmten anderen Leuchte (120-j) anzeigen,
wobei die Überwachungseinrichtung dazu ausgelegt ist, in den Verlaufsdaten den Verlauf der von der einen oder den mehreren anderen Leuchten (120) empfangenen Statusanzeigen zu speichern, und
wobei das Ableiten der erwarteten Lichtpegelkennlinie Schätzen des erwarteten Lichtpegels in dem Raum basierend auf den Verlaufsdaten ferner in Abhängigkeit von dem aktuell für die Lichtausgabe in der bestimmten anderen Leuchte (120-j) angewandten Lichtintensitätspegel umfasst.

7. Leuchte (120-k) nach Anspruch 6, wobei das Ableiten der erwarteten Lichtpegelkennlinie Anwenden einer vordefinierten Abbildungsfunktion umfasst, die basierend auf den Verlaufsdaten abgeleitet wurde, um den erwarteten Lichtpegel abzuschätzen, wobei die Abbildungsfunktion zum Schätzen des erwarteten Lichtpegels in Abhängigkeit von dem aktuell für die mindestens eine Lichtquelle (121-k) angewandten Lichtintensitätspegel und in Abhängigkeit von dem aktuell für die Lichtausgabe in der bestimmten anderen Leuchte (120-j) angewandten Lichtintensitätspegel angewendet werden kann.

8. Leuchte (120-k) nach Anspruch 7,
wobei die Überwachungseinrichtung dazu ausgelegt ist, die Abbildungsfunktion basierend auf den jeweiligen Verläufen der beobachteten Lichtpegel in dem Raum, den für die mindestens eine Lichtquelle (121-k) angewandten Lichtintensitätspegeln, und den Lichtintensitätsanzeigen, die die für Lichtausgabe in der bestimmten anderen Leuchte (120-j) angewandten Lichtintensitätspegel angeben, abzuleiten; und
wobei das Ableiten der erwarteten Lichtpegelkennlinie Anwenden der abgeleiteten Abbildungsfunktion, um den erwarteten Lichtpegel in dem Raum in Abhängigkeit von dem aktuell für die mindestens eine Lichtquelle (121-k) angewandten Lichtintensitätspegel und in Abhängigkeit von dem zuletzt empfangenen Lichtintensitätspegel für die bestimmte andere Leuchte (120-j) abzuschätzen, umfasst.

9. Leuchte (120-k) nach Anspruch 1,
wobei die beobachtete Lichtpegelkennlinie eine beobachtete Änderung des Lichtpegels in dem Raum umfasst, und wobei die erwartete Lichtpegelkennlinie eine erwartete Änderung des Lichtpegels in dem Raum umfasst,
wobei das Ableiten der erwarteten Lichtpegelkennlinie Ableiten der erwarteten Änderung des Lichtpegels als Reaktion auf eine bestimmte Statusanzeige, die von einer bestimmten anderen Leuchte (120-j) empfangen wird, basierend auf einer Richtung der Änderung des Lichtpegels, die in der bestimmten Statusanzeige angezeigt wird, umfasst.

10. Leuchte (120-k) nach Anspruch 9, wobei das Ableiten der erwarteten Änderung des Lichtpegels Anzeigen eines erwarteten Anstiegs oder einer erwarteten Abnahme des Lichtpegel umfasst, und wobei das Ableiten der beobachteten Änderung des Lichtpegels Anzeigen eines von einem beobachteten Anstieg oder einem beobachteten Abfall des Lichtpegel umfasst.

11. Leuchte (120-k) nach Anspruch 9 oder 10,
wobei das Ableiten der erwarteten Lichtpegelkennlinie Anzeigen eines erwarteten Anstiegs des Lichtpegels als Reaktion auf die bestimmte Statusanzeige umfasst, die eines von dem Folgenden umfasst: eine Anzeige, dass die bestimmte andere Leuchte (120-j) ihre Lichtausgabe eingeschaltet hat, eine Anzeige des für die Lichtausgabe der bestimmten anderen Leuchte (120-j) angewandten Lichtintensitätspegels, die einen Anstieg des Lichtintensitätspegels anzeigt, im Vergleich zu dem in der letzten vorherigen Statusanzeige derselben Art angezeigten, die von der bestimmten anderen Leuchte (120-j) empfangen wurde, und/oder
wobei das Ableiten der erwarteten Lichtpegelkennlinie Anzeigen einer erwarteten Abnahme des Lichtpegels als Reaktion auf die bestimmte Statusanzeige umfasst, die eines von dem Folgenden umfasst: eine Anzeige, dass die bestimmte andere Leuchte (120-j) ihre Lichtausgabe ausgeschaltet hat, eine Anzeige des für die Lichtausgabe der bestimmten anderen Leuchte (120-j) angewandten Lichtintensitätspegels, die eine Abnahme des Lichtintensitätspegels anzeigt, im Vergleich zu dem in der letzten vorherigen Statusanzeige derselben Art angezeigten, die von der bestimmten anderen Leuchte (120-j) empfangen wurde.

12. Leuchte (120-k) nach einem der Ansprüche 9 bis 11, wobei die bestimmte Leuchte (120-j) eine der anderen Leuchten (120) ist, deren Lichtausgabe den Raum erreicht.

13. Leuchte (120-k) nach einem der Ansprüche 1 bis 12, wobei die Überwachungseinrichtung dazu ausgelegt ist, als Reaktion auf die Erkennung einer Fehlfunktion, zu identifizieren, ob die Fehlfunktion die Leuchte (120-k) oder mindestens eine andere Leuchte der Beleuchtungsanordnung (100) betrifft, zumindest teilweise basierend auf Verlaufsdaten, die einen Verlauf der beobachteten Lichtpegel in dem Raum und einen Verlauf der für die mindestens eine Lichtquelle (121-k) angewandten Lichtintensitätspegel umfassen.

14. Leuchte (120-k) nach einem der Ansprüche 1 bis 13, wobei die Überwachungseinrichtung dazu ausgelegt ist, als Reaktion auf die Erkennung einer Fehlfunktion einen Fehlfunktionsbericht bereitzustellt, der den erkannten Fehlfunktionsstatus der Leuchte (120-k) und/oder einer oder mehrerer anderer Leuchten der Beleuchtungsanordnung (100) beschreibt.

## Revendications

1. Luminaire (120-k) pour l'illumination d'un espace dans un agencement d'éclairage (100) comprenant un ou plusieurs luminaires (120), le luminaire (120-k) comprenant au moins une source de lumière (121-k) et un dispositif de commande d'éclairage (110-k) pour commander une lumière délivrée provenant de l'au moins une source de lumière, le dispositif de commande d'éclairage (110-k) comprenant :
un moyen de commande pour commander une lumière délivrée provenant de l'au moins une source de lumière (121-k) en fonction d'une logique de commande d'éclairage prédéfinie ;
et **caractérisé en ce que** le dispositif de commande d'éclairage comprend en outre :
un moyen de communication pour une communication sans fil avec d'autres luminaires de l'agencement d'éclairage (100), le moyen de communication étant agencé pour recevoir des indications d'état en provenance des autres luminaires de l'agencement d'éclairage (100), chaque indication d'état décrivant une caractéristique de fonctionnement d'un des autres luminaires respectif de l'agencement d'éclairage (100) et, lesdites indications d'état comprenant des indications d'intensité de lumière respectives qui indiquent un niveau d'intensité de lumière appliqué pour la lumière délivrée dans un des autres luminaires respectif de l'agencement d'éclairage (100) ; et
un moyen de surveillance pour surveiller un fonctionnement du luminaire (120-k) et/ou un fonctionnement respectif d'un ou plusieurs autres luminaires de l'agencement d'éclairage (100) sur la base d'un signal de capteur de lumière décrivant un niveau de lumière observé dans ledit espace, le moyen de surveillance étant agencé pour réaliser une procédure de surveillance comprenant :
la dérivation d'une caractéristique de niveau de lumière attendu sur la base d'informations reçues au niveau du dispositif de commande d'éclairage (110-k), lesdites informations comprenant un historique de niveaux de lumière observés dans ledit espace et au moins un des éléments suivants : un historique de niveaux d'intensité de lumière appliqués pour l'au moins une source de lumière (121-k), un historique d'indications d'état reçues en provenance des autres luminaires de l'agencement d'éclairage (100),
la dérivation d'une caractéristique de niveau de lumière observé actuelle sur la base du signal de capteur de lumière,
la détermination si la caractéristique de niveau de lumière observé actuelle correspond à la caractéristique de niveau de lumière attendu, et
la détection d'un disfonctionnement dans l'agencement d'éclairage (100) en réponse au fait que la caractéristique de niveau de lumière observé actuelle ne correspond pas à la caractéristique de niveau de lumière attendu.

2. Luminaire (120-k) selon la revendication 1, la caractéristique de niveau de lumière observé actuelle comprenant un niveau de lumière observé actuel dans ledit espace et, la caractéristique de niveau de lumière attendu comprenant un niveau de lumière attendu dans ledit espace,
le moyen de surveillance étant agencé pour stocker, dans une mémoire dans le dispositif de commande d'éclairage (110-k), des données d'historique comprenant l'historique de niveaux de lumière observés dans ledit espace et l'historique de niveaux d'intensité de lumière appliqués pour l'au moins une source de lumière (121-k), et
la dérivation de la caractéristique de niveau de lumière attendu comprenant l'estimation du niveau de lumière attendu dans ledit espace sur la base desdites données d'historique en fonction d'un ou plusieurs des éléments suivants : une heure actuelle du jour, un niveau d'intensité de lumière appliqué actuellement pour l'au moins une source de lumière (121-k).

3. Luminaire (120-k) selon la revendication 2, la dérivation de la caractéristique de niveau de lumière attendu comprenant l'application d'une fonction de mise en correspondance prédéfinie dérivée sur la base desdites données d'historique pour estimer le niveau de lumière attendu, la fonction de mise en correspondance pouvant être appliquée pour estimer le niveau de lumière attendu en fonction d'un ou plusieurs des éléments suivants : une heure du jour actuelle, le niveau d'intensité de lumière appliqué actuellement pour l'au moins une source de lumière (121-k).

4. Luminaire (120-k) selon la revendication 3,
le moyen de surveillance étant agencé pour dériver ladite fonction de mise en correspondance sur la base des historiques respectifs des niveaux de lumière observés dans l'espace et des niveaux d'intensité de lumière appliqués pour l'au moins une source de lumière (121-k), et
la dérivation de la caractéristique de niveau de lumière attendu comprenant l'application de la fonction de mise en correspondance dérivée pour estimer le niveau de lumière attendu dans ledit espace en fonction du niveau d'intensité de lumière appliqué actuellement pour l'au moins une source de lumière (121-k).

5. Luminaire (120-k) selon la revendication 3,
le moyen de surveillance étant agencé pour dériver ladite fonction de mise en correspondance sur la base des historiques respectifs des niveaux de lumière observés dans l'espace et des niveaux d'intensité de lumière appliqués pour l'au moins une source de lumière (121-k) au regard d'informations de synchronisation respectives comprises dans les données d'historique ; et
la dérivation de la caractéristique de niveau de lumière attendu comprenant l'application de la fonction de mise en correspondance dérivée pour estimer le niveau de lumière attendu dans ledit espace en fonction d'une heure du jour actuelle et en fonction du niveau d'intensité de lumière appliqué actuellement pour l'au moins une source de lumière (121-k).

6. Luminaire (120-k) selon la revendication 2, lesdites indications d'état reçues en provenance des autres luminaires de l'agencement d'éclairage (100) comprenant des indications d'intensité de lumière issues d'un autre luminaire particulier (120-j) qui indiquent un niveau d'intensité de lumière appliqué pour la lumière délivrée dans l'autre luminaire particulier (120-j),
le moyen de surveillance étant agencé pour stocker, dans lesdites données d'historique, l'historique d'indications d'état reçues en provenance des un ou plusieurs autres luminaires (120), et
la dérivation de la caractéristique de niveau de lumière attendu comprenant l'estimation du niveau de lumière attendu dans ledit espace sur la base des données d'historique en outre en fonction du niveau d'intensité de lumière appliqué actuellement pour la lumière délivrée dans l'autre luminaire particulier (120-j).

7. Luminaire (120-k) selon la revendication 6, la dérivation de la caractéristique de niveau de lumière attendu comprenant l'application d'une fonction de mise en correspondance prédéfinie dérivée sur la base desdites données d'historique pour estimer le niveau de lumière attendu, la fonction de mise en correspondance pouvant être appliquée pour estimer le niveau de lumière attendu en fonction du niveau d'intensité de lumière appliqué actuellement pour l'au moins une source de lumière (121-k) et en fonction du niveau d'intensité de lumière appliqué actuellement pour la lumière délivrée dans l'autre luminaire particulier (120-j).

8. Luminaire (120-k) selon la revendication 7,
le moyen de surveillance étant agencé pour dériver ladite fonction de mise en correspondance sur la base des historiques respectifs des niveaux de lumière observés dans l'espace, des niveaux d'intensité de lumière appliqués pour l'au moins une source de lumière (121-k) et des indications d'intensité de lumière qui indiquent des niveaux d'intensité de lumière appliqués pour la lumière délivrée dans l'autre luminaire particulier (120-j) ; et
la dérivation de la caractéristique de niveau de lumière attendu comprenant l'application de la fonction de mise en correspondance dérivée pour estimer le niveau de lumière attendu dans ledit espace en fonction du niveau d'intensité de lumière appliqué actuellement pour l'au moins une source de lumière (121-k) et en fonction du niveau d'intensité de lumière le plus récemment reçu pour l'autre luminaire particulier (120-j).

9. Luminaire (120-k) selon la revendication 1,
la caractéristique de niveau de lumière observé comprenant un changement observé de niveau de lumière dans ledit espace et, la caractéristique de niveau de lumière attendu comprenant un changement attendu de niveau de lumière dans ledit espace,
la dérivation des caractéristiques de niveau de lumière attendu comprenant la dérivation du changement attendu de niveau de lumière en réponse à une indication d'état particulière reçue en provenance d'un autre luminaire particulier (120-j) sur la base d'une direction de changement de niveau de lumière indiquée dans ladite indication d'état particulière.

10. Luminaire (120-k) selon la revendication 9, la dérivation du changement attendu de niveau de lumière comprenant l'indication d'une d'une augmentation attendue ou d'une diminution attendue de niveau de lumière et, la dérivation du changement observé de niveau de lumière comprenant une indication d'une d'une augmentation observée ou d'une diminution observée de niveau de lumière.

11. Luminaire (120-k) selon la revendication 9 ou 10, la dérivation des caractéristiques de niveau de lumière attendu comprenant l'indication d'une augmentation attendue de niveau de lumière en réponse au fait que ladite indication d'état particulière comprend un des éléments suivants : une indication du fait que l'autre luminaire particulier (120-j) a activé sa lumière délivrée, une indication du niveau d'intensité de lumière appliqué pour la lumière délivrée de l'autre luminaire particulier (120-j) qui indique une augmentation de niveau d'intensité de lumière en comparaison à celui indiqué dans l'indication d'état précédente la plus récente du même type reçue en provenance dudit autre luminaire particulier (120-j), et/ou
la dérivation des caractéristiques de niveau de lumière attendu comprenant l'indication d'une diminution attendue de niveau de lumière en réponse au fait que ladite indication d'état particulière comprend un des éléments suivants : une indication du fait que l'autre luminaire particulier (120-j) a désactivé sa lumière délivrée, une indication du niveau d'intensité de lumière appliqué pour la lumière délivrée de l'autre luminaire particulier (120-j) qui indique une diminution de niveau d'intensité de lumière en comparaison à celui indiqué dans une indication d'état précédente la plus récente du même type reçue en provenance dudit autre luminaire particulier (120-j).

12. Luminaire (120-k) selon l'une quelconque des revendications 9 à 11, le luminaire particulier (120-j) étant un des autres luminaires (120) dont la lumière délivrée atteint ledit espace.

13. Luminaire (120-k) selon l'une quelconque des revendications 1 à 12, le moyen de surveillance étant agencé pour identifier, en réponse à la détection d'un disfonctionnement, si le disfonctionnement concerne le luminaire (120-k) ou au moins un autre luminaire de l'agencement d'éclairage (100) sur la base au moins en partie de données d'historique comprenant un historique de niveaux de lumière observés dans ledit espace et un historique de niveaux d'intensité de lumière appliqués pour l'au moins une source de lumière (121-k).

14. Luminaire (120-k) selon l'une quelconque des revendications 1 à 13, le moyen de surveillance étant agencé pour fournir, en réponse à la détection d'un disfonctionnement, un rapport de disfonctionnement décrivant un état de disfonctionnement détecté relatif au luminaire (120-k) et/ou à un ou plusieurs autres luminaires de l'agencement d'éclairage (100).
